# FASCICULE DE BREVET EUROPEEN

(11) **EP 3 331 691 B1**
(45) Date de publication et mention de la délivrance du brevet: **09.10.2019**
(21) Numéro de dépôt: 16760534.4
(22) Date de dépôt: 05.08.2016
(51) Int. Cl.: B29D 11/02, B32B 37/12, B29D 11/00, B29C 67/00, G02B 1/10

(54) **PROCÉDÉ DE LAMINATION D'UN REVÊTEMENT INTERFÉRENTIEL COMPORTANT UNE COUCHE DE NATURE ORGANIQUE-INORGANIQUE ET ARTICLE AINSI OBTENU**
VERFAHREN ZUM LAMINIEREN EINER INTERFERENZBESCHICHTUNG MIT EINER ORGANISCHEN/ANORGANISCHEN SCHICHT UND DARAUS HERGESTELLTES ELEMENT
METHOD FOR LAMINATING AN INTERFERENCE COATING COMPRISING AN ORGANIC/INORGANIC LAYER, AND ITEM THUS OBTAINED

(30) Priorité: 05.08.2015 FR 1557557
(43) Date de publication de la demande: 13.06.2018
(73) Titulaire: Essilor International, 94220 Charenton-le-Pont (FR)
(72) Inventeur: LECHAT, Céline, 94227 Charenton le Pont cedex (FR); SCHERER, Karin, 94227 Charenton le Pont cedex (FR)
(74) Mandataire: Jacobacci Coralis Harle
(86) Numéro de dépôt international: PCT/FR2016/052040
(87) Numéro de publication internationale: WO 2017/021668

(56) Documents cités:
- EP-A1- 2 524 798
- WO-A1-2012/076714

## Description

La présente invention concerne un procédé d'application d'un empilement comprenant un revêtement interférentiel, notamment antireflet, sur une surface courbe de substrat d'article d'optique, de préférence sur le substrat d'une lentille ophtalmique, et l'article d'optique ainsi obtenu.

Il est connu de revêtir des articles d'optique tels que des lentilles ophtalmiques ou des écrans de revêtements interférentiels, notamment antireflets, qui sont généralement formés d'un empilement multicouche de matériaux minéraux diélectriques tels que SiO, SiO₂, Si₃N₄, TiO₂, ZrO₂, Al₂O₃, MgF₂ ou Ta₂O₅.

Un des problèmes rencontrés pour tous les types de revêtements interférentiels minéraux est leur grande fragilité due principalement à leur nature minérale. Ces revêtements peuvent difficilement être soumis à une déformation ou une dilatation importante, car la contrainte subie se traduit souvent par un craquèlement qui se propage sur l'ensemble de la surface du revêtement, le rendant généralement inutilisable. Ainsi, les revêtements interférentiels entièrement de nature inorganique ont tendance à craquer, y compris pour de faibles taux de déformation, par exemple de l'ordre de 1 %.

Ainsi, lors du taillage et du montage d'un verre chez l'opticien, le verre subit des déformations mécaniques qui peuvent provoquer des fissures dans les revêtements interférentiels, en particulier lorsque l'opération n'est pas conduite avec soin. De façon similaire, des sollicitations en température (chauffage de la monture) peuvent provoquer des fissures dans le revêtement interférentiel. Selon le nombre et la taille des fissures, celles-ci peuvent gêner la vue pour le porteur et empêcher la commercialisation du verre. En outre, pendant le port de verres organiques traités, des rayures peuvent apparaître. Dans les revêtements interférentiels minéraux, certaines rayures entraînent des fissurations, rendant les rayures plus visibles à cause d'une diffusion de lumière.

De plus, il est souvent utile de coller un film fonctionnalisé sur une face courbe d'un article d'optique tel qu'une lentille optique ou un verre de lunettes, pour lui conférer une propriété désirée. Par exemple, le film peut être un film comportant un revêtement interférentiel, antistatique, polarisant, d'augmentation de contraste ou photochrome.

Etant donné que la face de l'article d'optique est incurvée (convexe ou concave) et que le film fonctionnel est initialement plan, des délaminations, des déchirements et/ou des plis peuvent apparaître dans le film lorsqu'il est appliqué sur la face de l'article d'optique, à cause de la différence de courbure entre cette face et le film.

La demande WO 2006/105999, au nom du déposant, décrit un procédé permettant de laminer un film plan flexible fonctionnalisé sur une lentille optique en le conformant à cette lentille. Ce procédé permet de recouvrir la totalité de la surface de la lentille mais engendre des déformations élevées dans le film fonctionnalisé, si bien qu'il est utilisable préférentiellement pour des articles d'optique dont la courbure est faible.

La demande WO 2009/021793, au nom du déposant, permet de laminer un film fonctionnel ayant une forme initiale sensiblement plane sur une face courbe d'un substrat. Il comprend une étape de déformation du film fonctionnel à la courbure du substrat, pendant laquelle celui-ci est retenu sur une face d'une membrane auxiliaire déformable par des moyens de liaison adaptés pour que la forme du film fonctionnel varie conformément à une déformation de la membrane, le film fonctionnel restant parallèle à la membrane, seule la membrane auxiliaire étant maintenue par des moyens mécaniques à son pourtour, le film fonctionnel n'étant maintenu en contact avec ladite membrane auxiliaire que par lesdits moyens de liaison; et les moyens de liaison sont adaptés en outre pour que des parties du film fonctionnel puissent se déplacer localement par rapport à et parallèlement à la membrane pendant l'étape de déformation. Les déformations du film fonctionnel engendrées par ce procédé sont avantageusement limitées par rapport au procédé de la demande WO 2006/105999, dans la mesure où à courbure égale, le procédé de la demande WO 2009/021793 entraîne une moindre sollicitation mécanique du film, ce qui limite sa fissuration. Ceci permet d'utiliser des articles de courbures plus élevées, mais en contrepartie, la surface du substrat de l'article d'optique couverte par le film fonctionnalisé est généralement plus limitée, car il est nécessaire d'employer un film fonctionnalisé de dimensions plus réduites.

En outre, les revêtements interférentiels minéraux (inorganiques) ayant une déformation à la rupture limitée, il existe une courbure maximale pour les substrats au-delà de laquelle il n'est pas possible de réaliser la lamination du film en ayant recours aux procédés décrits ci-dessus sans le fissurer. Il est donc souhaitable d'élargir à la fois la gamme accessible en termes de courbure de verre et de surface utile recouverte par le film fonctionnel.

De plus, la déformation du film fonctionnel en vue de le conformer à la géométrie de la surface de l'article d'optique courbe induit un décalage des propriétés optiques de ce film vers un ensemble de valeurs plus ou moins éloignées des valeurs ciblées, du fait notamment de la modification des épaisseurs des couches de l'empilement survenant pendant la déformation. Il n'existe actuellement pas d'autre solution que de tolérer ce décalage des propriétés optiques par rapport à la cible.

Pour limiter l'occurrence de dégradations du film fonctionnel, il est connu de le préformer, en lui conférant une courbure initiale appropriée avant de l'appliquer sur le substrat. En particulier, le film peut être préformé par thermoformage, comme décrit dans la demande EP2524798. Dans ce cas, le chauffage du film peut le rendre plus souple afin que la déformation du film crée moins de dommages dans celui-ci. Néanmoins, un tel préformage provoque des déformations dans le film qui sont défavorables, et qui peuvent engendrer des dégradations au sein de la fonctionnalité du film et/ou d'ordre cosmétique. Différents systèmes de mise en oeuvre sont connus mais aucun ne permettent d'aboutir à un résultat totalement satisfaisant. Ceci est particulièrement vrai dans le cas où le film est amené à apporter une fonction à un substrat tel qu'une lentille ophtalmique. Dans ce cas, en plus des dégradations de la fonctionnalité portée par le film et l'apparition de défauts cosmétiques, des dégradations dioptriques peuvent être observées.

Un but de la présente invention est donc de disposer d'un nouveau procédé de collage d'un film sur un substrat courbe, pour transférer de façon plus flexible un film fonctionnel par lamination, et pour lequel les déformations qui sont créées dans le film fonctionnel sont réduites et génèrent moins de défauts dans le film. D'une façon avantageuse, ce procédé est utilisé pour apporter notamment une fonctionnalité interférentielle au moyen d'un film fonctionnel tel que décrit précédemment à un substrat. On comprendra aisément que dans ce cadre d'utilisation, le procédé doit permettre de conserver les propriétés optiques voire dioptriques de l'article d'optique, ainsi que ses propriétés cosmétiques afin de garantir une transparence optique optimale pour un tel objet fonctionnalisé en particulier s'il a pour vocation de corriger ou protéger la vue. Enfin ce procédé doit permettre de maintenir l'intégrité de la ou des fonctions présentes au sein du film fonctionnel lors de son passage d'une surface plane à une surface courbe.

Un autre but de l'invention est de proposer un moyen efficace pour réduire de façon satisfaisante la fragilité inhérente des revêtements interférentiels minéraux et augmenter significativement la température ou la contrainte au-delà de laquelle la dilatation ou la déformation du revêtement provoque son craquèlement.

L'invention vise en particulier des articles possédant une température critique améliorée, c'est à dire, présentant une bonne résistance à la craquelure lorsqu'ils sont soumis à une élévation de température. Un autre objectif de l'invention est de disposer d'un procédé de fabrication d'un article équipé d'un revêtement interférentiel qui soit simple, facile à mettre en oeuvre et reproductible.

Ces problèmes sont résolus selon l'invention en modifiant la nature d'une ou plusieurs couches inorganiques du revêtement interférentiel, remplacée(s) par une ou des couches de nature organique-inorganique, c'est-à-dire des couches à base de composés carbonés et métalliques ou métalloïdiques. Ces matériaux présentent une résistance améliorée au craquèlement ou à la fissuration et remplacent avantageusement les matériaux inorganiques traditionnels tels que le dioxyde de titane, de zirconium ou la silice dans les revêtements interférentiels. Le revêtement interférentiel selon l'invention peut être davantage déformé sans subir de dommages qu'un revêtement interférentiel minéral classique.

Les buts fixés sont donc atteints selon l'invention par un procédé de préparation d'un article d'optique ayant un rayon de courbure non nul revêtu d'un revêtement interférentiel, comprenant les étapes suivantes :
a) fournir un film thermoplastique revêtu d'un revêtement interférentiel multicouche, ledit revêtement interférentiel comprenant au moins une couche ayant un indice de réfraction supérieur à 1,65 et au moins une couche ayant un indice de réfraction inférieur ou égal à 1,65, l'une au moins des couches du revêtement interférentiel étant une couche de nature organique-inorganique ayant été déposée sous vide,
b) laminer ledit film thermoplastique revêtu sur un article d'optique comprenant un substrat, au moyen d'une couche d'adhésif, ladite couche d'adhésif étant disposée entre l'article d'optique et la surface du film thermoplastique non revêtue du revêtement interférentiel,
c) récupérer ledit article d'optique comprenant un substrat revêtu de la couche d'adhésif, du film thermoplastique et du revêtement interférentiel multicouche.

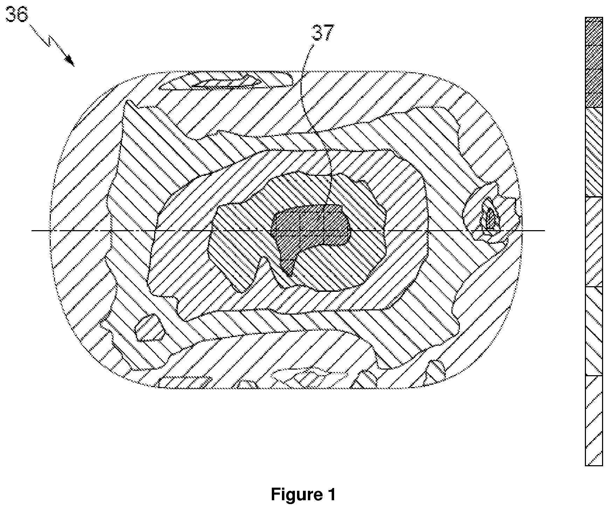

L'invention sera décrite plus en détail en référence au dessin annexé, dans lequel la figure 1 est une représentation des taux de déformation mesurés sur la surface d'un film thermoplastique fonctionnel laminé à la surface d'un article d'optique ayant un rayon de courbure non nul.

Dans la présente demande, lorsqu'un article comprend un ou plusieurs revêtements à sa surface, l'expression "déposer une couche ou un revêtement sur l'article" signifie qu'une couche ou un revêtement est déposé sur la surface à découvert (exposée) du revêtement externe de l'article, c'est-à-dire son revêtement le plus éloigné du substrat.

Un revêtement qui est "sur" un substrat ou qui a été déposé "sur" un substrat est défini comme un revêtement qui (i) est positionné au-dessus du substrat, (ii) n'est pas nécessairement en contact avec le substrat (bien que préférentiellement, il le soit), c'est-à-dire qu'un ou plusieurs revêtements intermédiaires peuvent être disposés entre le substrat et le revêtement en question, et (iii) ne recouvre pas nécessairement le substrat complètement (bien que préférentiellement, il le recouvre). Lorsque "une couche 1 est localisée sous une couche 2", on comprendra que la couche 2 est plus éloignée du substrat que la couche 1.

Sauf indication contraire, les épaisseurs mentionnées dans la présente demande sont des épaisseurs physiques.

L'article préparé selon l'invention comprend un substrat, de préférence transparent, ayant des faces principales avant et arrière, l'une au moins desdites faces principales comportant un revêtement interférentiel comprenant au moins une couche organique-inorganique, de préférence les deux faces principales. Une couche organique-inorganique est définie comme étant une couche comprenant des atomes de carbone, d'un métal ou metalloïde et de préférence d'oxygène. Elle est selon l'invention obtenue par dépôt sous vide.

Par face arrière (généralement concave) du substrat, on entend la face qui, lors de l'utilisation de l'article, est la plus proche de l'oeil du porteur. Inversement, par face avant (généralement convexe) du substrat, on entend la face qui, lors de l'utilisation de l'article, est la plus éloignée de l'oeil du porteur.

L'article selon l'invention est un article d'optique, notamment un filtre optique, mieux une lentille optique, et encore mieux une lentille ophtalmique, correctrice ou non, pour lunettes, ou une ébauche de lentille optique ou ophtalmique telle qu'une lentille optique semi-finie, en particulier un verre de lunettes, des lunettes de protection utilisables notamment en environnement de travail. La lentille peut être une lentille polarisée, colorée, une lentille photochrome ou électrochrome.

Le substrat de l'article selon l'invention est de préférence un verre organique, par exemple en matière plastique thermoplastique ou thermodurcissable. Ce substrat peut être choisi parmi les substrats cités dans la demande WO 2008/062142, par exemple un substrat obtenu par (co)polymérisation du bis allyl carbonate du diéthylèneglycol, un substrat en poly(thio)uréthane ou à base de polyépisulfures, un substrat en polycarbonate de bis(phénol A) (thermoplastique), noté PC, ou un substrat en PMMA (polyméthacrylate de méthyle).

Le film thermoplastique selon l'invention supportant un revêtement interférentiel peut être laminé sur au moins l'une des faces principales d'un substrat nu, c'est-à-dire non revêtu, ou sur au moins l'une des faces principales d'un substrat déjà revêtu d'un ou plusieurs revêtements fonctionnels.

Avant le dépôt du film thermoplastique comportant le revêtement interférentiel sur le substrat éventuellement revêtu, par exemple d'un revêtement anti-abrasion et/ou anti-rayure, il est courant de soumettre la surface dudit substrat, éventuellement revêtue, à un traitement d'activation physique ou chimique, destiné à augmenter l'adhésion de ce revêtement. Ce prétraitement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide. Il peut également s'agir d'un traitement de surface acide ou basique et/ou par solvants (eau ou solvant organique). Ces traitements sont décrits plus en détail dans la demande WO 2014/199103.

De même, avant le dépôt du revêtement interférentiel ou d'autres revêtements fonctionnels sur le film thermoplastique, sa surface peut être soumise à un traitement d'activation ou de nettoyage tel que les traitements envisagés ci-dessus, notamment un traitement avec une solution aqueuse de soude, concentrée à 10%, à 60°C pendant 4 minutes, suivi d'une étape de rinçage à l'eau adoucie et de séchage à l'air chaud (60°C). Avant l'application d'une couche d'adhésif sur une surface de ce film, celle-ci est préférentiellement soumise à un traitement de surface par plasma d'oxygène sous pression réduite.

Le revêtement interférentiel multicouche selon l'invention est formé sur une surface principale d'un film thermoplastique, préformé, qui remplit un rôle de support déformable. Ce film de nature polymère peut être composé d'un ou de plusieurs polymères préférentiellement transparents, c'est-à-dire un polymère présentant une diffusion inférieure à 0,5 %, de préférence comprise entre 0,2 et 0,3 % et un facteur de transmission au moins égal à 90 %, de préférence compris entre 93 % et 98 % (ces mesures de diffusion et de facteur de transmission sont réalisées selon la norme ASTM D1003 sur un appareil Haze Guard).

Sa température de transition vitreuse, mesurée par DMA (analyse mécanique dynamique) est supérieure à la température d'utilisation de l'article optique, qui est le plus souvent la température ambiante. La température de transition vitreuse du film varie généralement de 50°C à 250°C, de préférence de 70 à 200°C. A la température d'utilisation, le film polymère thermoplastique n'est donc pas à l'état plastique mais à l'état vitreux.

Le film thermoplastique comprend de préférence au moins un polymère choisi parmi le PET (polyéthylène téréphtalate), un polyuréthane, les COP et les COC (cyclolefin polymer et copolymer), le polycarbonate, le poly(méthacrylate de méthyle), le polystyrène, l'alcool polyvinylique, l'acétate butyrate de cellulose (CAB), ou un acétate de cellulose tel que le triacétate de cellulose (TAC), de préférence le PET et le TAC. Il s'agit idéalement d'un film à base de triacétate de cellulose ayant de préférence une température de transition vitreuse comprise entre 100 et 180°C ou un film à base de PET ayant de préférence une température de transition vitreuse comprise entre 50 et 150°C.

L'épaisseur de ce film en polymère thermoplastique varie de préférence de 30 à 500 µm, de préférence 50 µm à 200 µm, en particulier de 60 µm à 100 µm.

Ce film thermoplastique peut être revêtu sur une de ses faces directement du revêtement interférentiel selon l'invention, ou d'un revêtement anti-abrasion et/ou anti-rayure sur lequel sera formé le revêtement interférentiel.

Le revêtement anti-abrasion et/ou anti-rayure est de préférence un revêtement de type vernis nanocomposite à base de silice dispersée dans une matrice organique. De tels vernis sont décrits en détail, par exemple dans EP 0614957.

Parmi les revêtements anti-abrasion et/ou anti-rayure pouvant être mis en oeuvre dans le cadre de l'invention, on notera les revêtements thermodurcissables obtenus à partir d'époxyalkylalkoxysilanes, comportant de préférence au moins deux groupements hydrolysables, de préférence au moins trois, liés à l'atome de silicium, tels que le γ-glycidoxypropyltriméthoxysilane (GLYMO), et d'alkylalcoxysilanes, tels que le diméthyldiéthoxysilane (DMDES), ou d'hydrolysats de ces composés, et d'un catalyseur tel que l'acétylacétonate d'aluminium. Préférentiellement, le revêtement anti-abrasif contient aussi un composé colloïdal, tel qu'un oxyde métallique ou de la silice. Un revêtement particulièrement intéressant est décrit dans l'exemple 3 du brevet EP 0614957.

Ce revêtement anti-abrasion et/ou anti-rayure peut être appliqué selon des procédés connus, par exemple par immersion (dip coating), centrifugation (spin coating), par étalement (bar coating) ou par pulvérisation (spray coating).

Son épaisseur est similaire à celle des revêtements anti-abrasion et/ou anti-rayure connus et varie généralement de 1 à 15 µm, de préférence de 2 à 10 µm.

L'article selon l'invention comporte un revêtement interférentiel comprenant au moins une couche organique-inorganique, qui constitue soit une couche de bas indice de réfraction du revêtement interférentiel multicouche, notamment antireflet, soit une couche de haut indice de réfraction.

Dans la présente demande, une couche, notamment une couche du revêtement interférentiel, est dite couche de haut indice de réfraction lorsque son indice de réfraction est supérieur à 1,65, de préférence supérieur ou égal à 1,70, mieux supérieur ou égal à 1,8 et encore mieux supérieur ou égal à 2,0, et une couche est dite couche de bas indice de réfraction lorsque son indice de réfraction est inférieur ou égal à 1,65, de préférence inférieur ou égal à 1,55, mieux inférieur ou égal à 1,50 et encore mieux inférieur ou égal à 1,45.

Le revêtement interférentiel peut être tout revêtement interférentiel classiquement utilisé dans le domaine de l'optique, en particulier de l'optique ophtalmique, excepté le fait qu'il comporte au moins une couche ayant un indice de réfraction supérieur à 1,65 et au moins une couche ayant un indice de réfraction inférieur ou égal à 1,65, et que l'une au moins de ses couches est une couche organique-inorganique ayant été déposée sous vide.

Le revêtement interférentiel peut être, sans limitation, un filtre optique, un revêtement antireflet, un revêtement réfléchissant (miroir), de préférence un revêtement antireflet.

Un revêtement antireflet se définit comme un revêtement, déposé à la surface d'un article, qui améliore les propriétés anti-réfléchissantes de l'article final. Il permet de réduire la réflexion de la lumière à l'interface article-air sur une portion relativement large du spectre visible.

Comme cela est bien connu, les revêtements interférentiels, de préférence les revêtements antireflet, comprennent classiquement un empilement de matériaux diélectriques formant des couches de haut indice de réfraction (HI) et des couches de bas indice de réfraction (BI).

Les couches HI sont des couches de haut indice de réfraction classiques, bien connues dans la technique. Elles comprennent généralement un ou plusieurs oxydes minéraux tels que, sans limitation, la zircone (ZrO₂), le dioxyde de titane (TiO₂), le pentoxyde de tantale (Ta₂O₅), l'oxyde de néodyme (Nd₂O₅), l'oxyde d'hafnium (HfO₂), l'oxyde de praséodyme (Pr₂O₃), le titanate de praséodyme (PrTiO₃), La₂O₃, Nb₂O₅, Y₂O₃, l'oxyde d'indium In₂O₃, ou l'oxyde d'étain SnO₂. Les matériaux préférés sont TiO₂, Ta₂O₅, PrTiO₃, ZrO₂, SnO₂, In₂O₃ et leurs mélanges.

Les couches BI sont également bien connues et peuvent comprendre, sans limitation, SiO₂, MgF₂, ZrF₄, de l'alumine (Al₂O₃) en faible proportion, AlF₃, et leurs mélanges, de préférence SiO₂. On peut également utiliser des couches SiOF (SiO₂ dopée au fluor). Idéalement, le revêtement interférentiel de l'invention ne comprend aucune couche comprenant un mélange de silice et d'alumine.

L'épaisseur totale du revêtement interférentiel est généralement supérieure à 100 nm, de préférence supérieure à l'une des valeurs suivantes : 500 nm, 600 nm, 700 nm, 800 nm, 900 nm, 1 micromètre, 1,1 micromètre, 1,2 micromètre.

Préférentiellement, l'épaisseur totale du revêtement interférentiel est inférieure ou égale à 2 micromètres, mieux inférieure ou égale à 1,5 µm. Dans un mode de réalisation, l'épaisseur totale du revêtement interférentiel est inférieure ou égale à 1 µm.

Le procédé de l'invention est particulièrement avantageux pour la lamination de revêtements interférentiels multicouches épais ou possédant des couches épaisses ou un nombre de couches élevé. En effet, les empilements interférentiels de ce type sont naturellement plus fragiles d'un point de vue mécanique. Le fait qu'un revêtement interférentiel multicouche épais ou possédant des couches épaisses ou un nombre de couches élevé comporte au moins une couche organique-inorganique selon l'invention permet d'éviter les craquelures dues au procédé de lamination.

De préférence encore, le revêtement interférentiel, qui est de préférence un revêtement antireflet, comprend au moins deux couches de bas indice de réfraction (BI) et au moins deux couches de haut indice de réfraction (HI). Préférentiellement, le nombre total de couches du revêtement interférentiel est supérieur ou égal à 8, mieux supérieur ou égal à 9, encore mieux supérieur ou égal à 10. Dans certains modes de réalisation, le nombre total de couches du revêtement interférentiel est inférieur ou égal à 8, mieux inférieur ou égal à 6.

Il n'est pas nécessaire que les couches HI et BI soient alternées dans le revêtement interférentiel, bien qu'elles puissent l'être selon un mode de réalisation de l'invention. Deux couches HI (ou plus) peuvent être déposées l'une sur l'autre, tout comme deux couches BI (ou plus) peuvent être déposées l'une sur l'autre.

Selon un mode de réalisation, toutes les couches de bas indice de réfraction du revêtement interférentiel sont des couches organiques-inorganiques, identiques ou différentes. Dans un autre mode de réalisation, la couche externe du revêtement interférentiel multicouche, c'est-à-dire la couche du revêtement interférentiel la plus éloignée du substrat dans l'ordre d'empilement, est une couche organique-inorganique de bas indice de réfraction. Une couche organique-inorganique de bas indice de réfraction (présentant un indice de réfraction inférieur ou égal à 1,65), notée couche A, est de préférence directement déposée sur une couche de haut indice de réfraction.

De préférence, la couche externe du revêtement interférentiel est une couche de bas indice de réfraction qui se trouve préférentiellement directement en contact avec une couche sous-jacente de haut indice de réfraction. Selon un autre mode de réalisation, toutes les couches de haut indice de réfraction du revêtement interférentiel sont des couches organiques-inorganiques, identiques ou différentes. Dans certains articles selon l'invention, la première couche du revêtement interférentiel, dans l'ordre de dépôt, est une couche organique-inorganique de haut indice de réfraction. Une couche organique-inorganique de haut indice de réfraction selon l'invention (présentant un indice de réfraction supérieur à 1,65) est notée couche B.

Selon un mode de réalisation préféré, toutes les couches du revêtement interférentiel sont des couches organiques-inorganiques. Dans ce cas, le revêtement interférentiel peut être composé d'une alternance de couches A et B selon l'invention en contact direct les unes avec les autres.

Selon un autre mode de réalisation, toutes les couches du revêtement interférentiel comprennent au moins un composé organosilicié qui peut être choisi parmi les composés organosiliciés décrits plus bas.

Selon un mode de réalisation de l'invention, le revêtement interférentiel comprend une sous-couche. Elle constitue dans ce cas généralement la première couche de ce revêtement interférentiel dans l'ordre de dépôt des couches, c'est-à-dire la couche du revêtement interférentiel qui est au contact du film thermoplastique support.

Par sous-couche du revêtement interférentiel, on entend un revêtement d'épaisseur relativement importante, utilisé dans le but d'améliorer la résistance à l'abrasion et/ou à la rayure dudit revêtement et/ou de promouvoir son adhésion au film thermoplastique. La sous-couche selon l'invention peut être choisie parmi les sous-couches décrites dans la demande WO 2010/109154. La sous-couche peut également être une couche de nature organique-inorganique ou comprendre une couche de nature organique-inorganique. Dans ce cas, ladite couche de nature organique-inorganique comprise dans ou constituant la sous-couche est de préférence une couche A.

Préférentiellement, la sous-couche a une épaisseur de 100 à 200 nm. Elle est préférentiellement de nature exclusivement minérale/inorganique et est préférentiellement constituée de silice SiO₂.

L'article de l'invention peut être rendu antistatique grâce à l'incorporation, de préférence dans le revêtement interférentiel, d'au moins une couche électriquement conductrice. La nature et la localisation dans l'empilement de la couche électriquement conductrice pouvant être utilisée dans l'invention sont décrites plus en détail dans la demande WO 2013/098531. Il s'agit de préférence d'une couche de 1 à 20 nm d'épaisseur comprenant de préférence au moins un oxyde métallique choisi parmi l'oxyde d'étain-indium (In₂O₃:Sn, oxyde d'indium dopé à l'étain noté ITO), l'oxyde d'indium (In₂O₃), et l'oxyde d'étain (SnO₂).

Les différentes couches du revêtement interférentiel autres que celles décrites ci-dessus sont préférentiellement déposées par dépôt sous vide selon l'une des techniques suivantes : i) par évaporation, éventuellement assistée par faisceau ionique ; ii) par pulvérisation par faisceau d'ion ; iii) par pulvérisation cathodique ; iv) par dépôt chimique en phase vapeur assisté par plasma. Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide. De préférence, le dépôt de chacune des couches du revêtement interférentiel est réalisé par évaporation sous vide.

La couche organique-inorganique du revêtement interférentiel comprend de préférence des atomes de carbone, d'oxygène, et d'un métal ou métalloïde choisi parmi le silicium, le zirconium, le titane et le niobium, de préférence le silicium. Dans ce dernier cas, elle constitue une couche silico-organique. Elle est préférentiellement obtenue par dépôt d'au moins un composé organosilicié, sous vide. Le dépôt de la couche organique-inorganique est de préférence assisté par une source d'ions. Le dépôt assisté par une source d'ions est préférentiellement un bombardement ionique, généralement effectué par un canon à ions. Une couche formée à partir d'un composé organosilicié constitue une couche de nature organique-inorganique dans la mesure où le procédé de dépôt est tel que la couche déposée comprend des atomes de carbone, d'oxygène, et d'un métal ou métalloïde.

Dans un mode de réalisation, la couche organique-inorganique est une couche de haut indice de réfraction, notée couche B, qui est préférentiellement obtenue par dépôt sous vide d'au moins un oxyde métallique de haut indice de réfraction et d'au moins un composé B organosilicié. Ce dépôt est préférentiellement assisté par une source d'ions, mieux un faisceau d'ions, encore mieux un canon à ions.

L'oxyde métallique précurseur de la couche B est un oxyde métallique de haut indice de réfraction, expression qui a été définie précédemment. Il peut être choisi parmi les oxydes métalliques et leurs mélanges convenant pour les couches de haut indice de réfraction décrites précédemment, ou parmi des oxydes métalliques sous-stoechiométriques tels qu'un oxyde de titane ou de zirconium sous-stoechiométrique, de formules respectives TiOx et ZrOx, avec x < 2, x variant de préférence de 0,2 à 1,2.

Il s'agit de préférence de l'oxyde TiO₂ ou d'un oxyde de titane sous-stoechiométrique tel que les composés TiO, Ti₂O₃ ou Ti₃O₅, ou bien d'un oxyde d'hafnium.

L'utilisation d'oxyde de titane est avantageuse en raison de l'indice de réfraction élevé de cet oxyde métallique. L'indice de réfraction du TiO₂ sous forme rutile est effectivement de l'ordre de 2,65 à 550 nm. Ainsi, la couche B peut conserver un indice de réfraction élevé (≥ 1,8) même si l'oxyde de titane est mélangé avec un composé B organosilicié d'indice de réfraction plus faible.

De préférence, l'indice de réfraction de la couche B est supérieur ou égal à l'une au moins des valeurs suivantes : 1,7, 1,8, 1,9, 2,0, 2,05 et idéalement supérieur ou égal à 2,1.

La couche B de l'article final contient de préférence au moins un oxyde métallique ayant un indice de réfraction supérieur ou égal à 1,8. Cet oxyde métallique peut être le même que l'oxyde métallique précurseur utilisé pour former la couche B et décrit ci-dessus ou être différent de celui-ci, dans la mesure où le processus de dépôt de la couche B peut induire une modification de l'oxyde métallique précurseur telle qu'une oxydation. Il s'agit de préférence d'un oxyde de titane, en particulier le composé TiO₂.

La couche B est formée d'un matériau obtenu par dépôt sous vide et de préférence sous l'assistance d'une source d'ions (notamment un faisceau d'ions), préférentiellement sous bombardement ionique, de deux catégories de précurseurs sous forme gazeuse, notamment par co-évaporation : au moins un oxyde métallique et au moins un composé B organosilicié. Cette technique de dépôt sous faisceau d'ions permet d'obtenir des espèces activées issues d'au moins un composé B organosilicié et d'au moins un oxyde métallique, sous forme gazeuse.

Dans la présente demande, les oxydes de métalloïdes sont considérés comme étant des oxydes métalliques, et le terme générique "métal" désigne également les métalloïdes.

Dans un mode de réalisation, la couche organique-inorganique est une couche de bas indice de réfraction, notée couche A, qui est préférentiellement obtenue par dépôt sous vide selon le cas, d'une ou deux catégories de précurseurs sous forme gazeuse, notamment par évaporation ou co-évaporation : au moins un composé A organosilicié et optionnellement au moins un composé inorganique, qui est préférentiellement un oxyde métallique. La description qui suit fera généralement référence à l'oxyde métallique précurseur de la couche A mais sera également applicable au cas où le composé inorganique précurseur n'est pas un oxyde métallique. Ce dépôt est préférentiellement assisté par une source d'ions (notamment un faisceau d'ions), idéalement sous bombardement ionique. Cette technique de dépôt sous faisceau d'ions permet d'obtenir des espèces activées issues d'au moins un composé A organosilicié et d'au moins un oxyde métallique (lorsqu'il est présent), sous forme gazeuse.

Le composé inorganique précurseur optionnel de la couche A est de préférence un oxyde métallique de bas indice de réfraction, expression qui a été définie précédemment. Il peut être choisi parmi les oxydes métalliques et leurs mélanges convenant pour les couches de bas indice de réfraction décrites précédemment, ou parmi des oxydes métalliques sous-stoechiométriques tels qu'un oxyde de silicium sous-stoechiométrique, de formule SiOx, avec x < 2, x variant de préférence de 0,2 à 1,2. Il s'agit de préférence des oxydes SiO₂ ou SiO ou de leurs mélanges, idéalement SiO₂.

L'indice de réfraction de la couche A est inférieur ou égal à 1,65, de préférence inférieur ou égal à 1,50. Selon des modes de réalisation de l'invention, l'indice de réfraction de la couche A est supérieur ou égal à 1,45, mieux supérieur à 1,47, mieux encore supérieur ou égal à 1,48 et idéalement supérieur ou égal à 1,49.

Des exemples de revêtements antireflet déformables sans être endommagés conformément à l'invention sont les revêtements suivants :
- Un revêtement antireflet possédant, dans l'ordre de dépôt sur le film thermoplastique, une couche de ZrO₂ de 20 nm d'épaisseur, une couche de SiO₂ de 25 nm d'épaisseur, une couche de ZrO₂ de 80 nm d'épaisseur, une couche d'oxyde d'étain-indium (ITO) de 6 nm d'épaisseur, et une couche organique-inorganique de 80 nm d'épaisseur, obtenue par dépôt sous vide et sous assistance ionique d'OMCTS,
- Un revêtement antireflet possédant, dans l'ordre de dépôt sur le film thermoplastique, une couche de ZrO₂ de 20 nm d'épaisseur, une couche de SiO₂ de 25 nm d'épaisseur, une couche de ZrO₂ de 80 nm d'épaisseur, une couche d'oxyde d'étain-indium (ITO) de 6 nm d'épaisseur, une couche organique-inorganique de 70 nm d'épaisseur obtenue par dépôt sous vide et sous assistance ionique d'OMCTS, et une couche de SiO₂ de 10 nm d'épaisseur.

De préférence, le dépôt des couches organiques-inorganiques est effectué dans une enceinte à vide, comportant un canon à ions dirigé vers les substrats à revêtir, qui émet vers ceux-ci un faisceau d'ions positifs générés dans un plasma au sein du canon à ions. Préférentiellement les ions issus du canon à ions sont des particules constituées d'atomes de gaz dont on a extrait un ou plusieurs électron(s), et formés à partir d'un gaz rare, d'oxygène ou d'un mélange de deux ou plus de ces gaz.

Les couches organiques-inorganiques étant formées par dépôt sous vide, elles ne comprennent pas d'hydrolysat de composé organosilicié et se distinguent donc des revêtements sol-gel obtenus par voie liquide.

Des précurseurs, à savoir le composé B silico-organique et l'oxyde métallique (dans le cas de la couche B) ou le composé A silico-organique et les composés inorganiques optionnels (dans le cas de la couche A), sont introduits ou passent dans un état gazeux dans l'enceinte à vide. Ils sont de préférence amenés en direction du faisceau d'ions et sont activés sous l'effet du canon à ions.

Sans vouloir être limités par une quelconque théorie, les inventeurs pensent que dans le cas de la couche B, le canon à ions induit une activation/dissociation du composé précurseur B et de l'oxyde métallique précurseur, ce qui formerait une couche organique-inorganique contenant des liaisons M-O-Si-CHx, M désignant l'atome de métal de l'oxyde métallique, et qu'un processus similaire a lieu dans le cas de la couche A lorsque celle-ci est formée à partir d'un oxyde métallique. En l'absence d'oxyde métallique, la dissociation des composés précurseurs, notamment les composés silico-organiques, libère des radicaux organiques qui se déposent sur le substrat.

Cette technique de dépôt utilisant un canon à ions et un précurseur gazeux, parfois désignée par « ion beam deposition » est décrite notamment avec des seuls précurseurs organiques dans le brevet US 5508368. Elle permet de former des couches avec des contraintes mécaniques faibles.

Selon l'invention, de façon préférentielle, le seul endroit de l'enceinte où un plasma est généré est le canon à ions.

Les ions peuvent faire l'objet, le cas échéant, d'une neutralisation avant la sortie du canon à ions. Dans ce cas, le bombardement sera toujours considéré comme ionique. Le bombardement ionique provoque un réarrangement atomique et une densification dans la couche en cours de dépôt, ce qui permet de la tasser pendant qu'elle est en train d'être formée et présente l'avantage d'augmenter son indice de réfraction du fait de sa densification.

Lors de la mise en oeuvre du procédé selon l'invention, la surface à traiter est préférentiellement bombardée par des ions, d'une densité de courant généralement comprise entre 20 et 1000 µA/cm², préférentiellement entre 30 et 500 µA/cm², mieux entre 30 et 200 µA/cm² sur la surface activée et généralement sous une pression résiduelle dans l'enceinte à vide pouvant varier de 6.10⁻⁵ mbar à 2.10⁻⁴ mbar, préférentiellement de 8.10⁻⁵ mbar à 2.10⁻⁴ mbar. On utilise de préférence un faisceau d'ions argon et/ou oxygène. Lorsqu'un mélange d'argon et d'oxygène est employé, le ratio molaire Ar / O₂ est de préférence ≤ 1, mieux ≤ 0,75 et encore mieux ≤ 0,5. Ce ratio peut être contrôlé en ajustant les débits de gaz dans le canon à ions. Le débit d'argon varie généralement de 0 à 30 sccm. De préférence, aucun gaz rare n'est utilisé. Le débit d'oxygène O₂ varie de préférence de 5 à 30 sccm, et est d'autant plus grand que le débit des composés précurseurs des couches A et B est élevé.

Les ions du faisceau d'ions, préférentiellement issus d'un canon à ions, utilisés au cours du dépôt de la couche A et/ou B ont de préférence une énergie allant de 5 à 1000 eV, mieux de 5 à 500 eV, préférentiellement de 75 à 150 eV, préférentiellement encore de 80 à 140 eV, mieux de 90 à 110 eV. Les espèces activées formées sont typiquement des radicaux ou des ions.

En cas de bombardement ionique lors du dépôt, il est possible d'effectuer un traitement par plasma concomitamment ou non au dépôt sous faisceau d'ions des couches A et/ou B. De préférence, le dépôt de ces couches est effectué sans l'assistance d'un plasma au niveau des substrats.

Le dépôt des couches A et/ou B, qui peut être réalisé selon des méthodes identiques ou différentes, s'effectue en présence d'une source d'oxygène lorsque le composé précurseur en question (A et/ou B) ne contient pas (ou pas suffisamment) d'atomes d'oxygène et que l'on souhaite que la couche correspondante contienne une certaine proportion d'oxygène. De même, le dépôt des couches A et/ou B s'effectue en présence d'une source d'azote lorsque le composé précurseur en question (A et/ou B) ne contient pas (ou pas suffisamment) d'atomes d'azote et que l'on souhaite que la couche correspondante contienne une certaine proportion d'azote. D'une manière générale, on préfère introduire du gaz oxygène avec le cas échéant une faible teneur en gaz azote, de préférence en l'absence de gaz azote.

Outre les couches organiques-inorganiques, d'autres couches du revêtement interférentiel peuvent être déposées sous bombardement ionique tel que décrit ci-dessus, c'est-à-dire en utilisant un bombardement au moyen d'un faisceau d'ions de la couche en cours de formation, émis de préférence par un canon à ions.

La méthode préférée pour la vaporisation des matériaux précurseurs des couches organiques-inorganiques, conduite sous vide, est le dépôt physique en phase vapeur, en particulier l'évaporation sous vide, généralement combinée à un chauffage des composés à évaporer. Elle peut être mise en jeu en utilisant des systèmes d'évaporation aussi divers qu'une source thermique à effet Joule (l'effet Joule est la manifestation thermique de la résistance électrique) ou un canon à électrons pour les précurseurs liquides ou solides, tout autre dispositif connu de l'homme du métier pouvant également être utilisé.

Les composés précurseurs organosiliciés A et B sont de préférence introduits dans l'enceinte à vide dans laquelle est réalisée la préparation des articles selon l'invention sous forme gazeuse, en contrôlant son débit. Ceci signifie qu'ils ne sont de préférence pas vaporisés à l'intérieur de l'enceinte à vide (contrairement aux oxydes métalliques précurseurs).

De préférence, les oxydes métalliques employés sont préchauffés de manière à se trouver dans un état fondu puis évaporé. Ils sont de préférence déposés par évaporation sous vide en utilisant un canon à électrons pour provoquer leur vaporisation.

Dans le cas de la couche B, le composé B précurseur et l'oxyde métallique précurseur sont de préférence déposés de façon concomitante (par exemple par co-évaporation) ou partiellement concomitante, c'est-à-dire avec chevauchement des étapes de dépôt de l'un et de l'autre précurseur. Dans ce dernier cas, le dépôt de l'un des deux précurseurs commence avant le dépôt de l'autre, le dépôt du second précurseur débutant avant la fin du dépôt du premier précurseur. Il en est de même pour la couche A lorsque celle-ci est formée à partir d'un composé inorganique.

Les composés A et B organosiliciés, précurseur respectifs des couches A et B, sont de nature organique et indépendants l'un de l'autre. Ils peuvent donc être identiques ou différents, et contiennent dans leur structure au moins un atome de silicium et au moins un atome de carbone. Ils comportent de préférence au moins une liaison Si-C, et comportent de préférence au moins un atome d'hydrogène. Selon un mode de réalisation, le composé A et/ou B comprend au moins un atome d'azote et/ou au moins un atome d'oxygène, de préférence au moins un atome d'oxygène.

La concentration de chaque élément chimique dans les couches A et B (métal M, Si, O, C, H, N...) peut être déterminée en utilisant la technique RBS (Rutherford Backscattering Spectrometry), ou ERDA (Elastic Recoil Détection Analysis).

Le pourcentage atomique en atomes de métal dans la couche B varie de préférence de 10 à 30 %. Le pourcentage atomique en atomes de carbone dans la couche B varie de préférence de 10 à 20 %. Le pourcentage atomique en atomes d'hydrogène dans la couche B varie de préférence de 10 à 30 %. Le pourcentage atomique en atomes de silicium dans la couche B varie de préférence de 10 à 20 %. Le pourcentage atomique en atomes d'oxygène dans la couche B varie de préférence de 20 à 40 %.

Le pourcentage atomique en atomes de métal dans la couche A varie de préférence de 0 à 15 %. Le pourcentage atomique en atomes de carbone dans la couche A varie de préférence de 10 à 25 %, mieux de 15 à 25 %. Le pourcentage atomique en atomes d'hydrogène dans la couche A varie de préférence de 10 à 40 %, mieux de 10 à 20 %. Le pourcentage atomique en atomes de silicium dans la couche A varie de préférence de 5 à 30 %, mieux de 15 à 25 %. Le pourcentage atomique en atomes d'oxygène dans la couche A varie de préférence de 20 à 60 %, mieux de 35 à 45 %.

Des exemples non limitatifs de composés organiques A et/ou B, cycliques ou non cycliques, sont les composés suivants : l'octaméthylcyclotétrasiloxane (OMCTS), le décaméthyl cyclopentasiloxane, le dodécaméthylcyclohexasiloxane, l'hexaméthyl cyclotrisiloxane, l'hexaméthyldisiloxane (HMDSO), l'octaméthyltrisiloxane, le décaméthyltétrasiloxane, le dodécaméthylpentasiloxane, le tétraéthoxysilane, le vinyltriméthylsilane, l'hexaméthyldisilazane, l'hexaméthyldisilane, l'hexaméthylcyclotrisilazane, le vinylméthyldiéthoxysilane, le divinyltétraméthyldisiloxane, le tétraméthyldisiloxane., le polydiméthylsiloxane (PDMS), le polyphénylméthylsiloxane (PPMS) ou un tétraalkylsilane tel que le tétraméthylsilane.

De préférence, le composé organosilicié (A et/ou B) comporte au moins un atome de silicium porteur d'au moins un groupe alkyle, de préférence en C1-C4, mieux au moins un atome de silicium porteur d'un ou de deux groupes alkyle identiques ou différents, de préférence en C1-C4, par exemple le groupe méthyle.

Les composés A et/ou B précurseurs préférés comportent un groupe Si-O-Si, mieux, un groupe divalent de formule (3) : 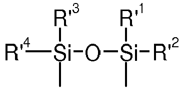 où R'¹ à R'⁴ désignent indépendamment des groupes alkyle ou vinyle linéaires ou ramifiés, de préférence en C1-C4, par exemple le groupe méthyle, des groupes aryle monocyclique ou polycyclique, hydroxyle ou des groupes hydrolysables. Des exemples non limitatifs de groupes hydrolysables sont les groupes H, halogène (chloro, bromo, iodo...), alcoxy, aryloxy, acyloxy, - NR¹R² où R¹ et R² désignent indépendamment un atome d'hydrogène, un groupe alkyle ou un groupe aryle, et -N(R³)-Si où R³ désigne un atome d'hydrogène, un groupe alkyle linéaire ou ramifié, de préférence en C1-C4 ou un groupe aryle, monocyclique ou polycyclique, de préférence monocyclique. Les groupes comportant un chaînon Si-O-Si ne sont pas considérés comme étant des "groupes hydrolysables" au sens de l'invention. Le groupe hydrolysable préféré est l'atome d'hydrogène.

Selon un autre mode de réalisation, le composé A et/ou B précurseur répond à la formule : 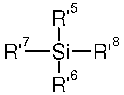 dans laquelle R'⁵, R'⁶, R'⁷, R'⁸ désignent indépendamment des groupes hydroxyle ou des groupes hydrolysables tels que des groupes OR, dans lesquels R est un groupe alkyle.

Selon un premier mode de réalisation, le composé A et/ou B comporte au moins un atome de silicium porteur de deux groupes alkyle identiques ou différents, de préférence en C1-C4. Selon ce premier mode de réalisation, le composé A et/ou B est de préférence un composé de formule (3) dans laquelle R'¹ à R'⁴ désignent indépendamment des groupes alkyle, de préférence en C1-C4, par exemple le groupe méthyle.

De préférence, le ou les atomes de silicium du composé A et/ou du composé B lorsqu'il est présent ne comportent aucun groupe hydrolysable ou groupe hydroxyle dans ce mode de réalisation.

Le ou les atomes de silicium du composé A et/ou B précurseur de la couche A et/ou B sont de préférence uniquement liés à des groupes alkyle et/ou des groupes comportant un chaînon -O-Si ou -NH-Si de façon à former un groupe Si-O-Si ou Si-NH-Si. Les composés précurseurs de la couche A et/ou B préférés sont l'OMCTS et le HMDSO.

Il s'agit préférentiellement d'un polysiloxane cyclique de formule (4) : 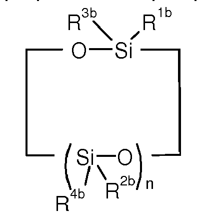 où n désigne un entier allant de 2 à 20, de préférence de 3 à 8, R^{1b} à R^{4b} représentent indépendamment des groupes alkyle linéaires ou ramifiés, de préférence en C1-C4 (par exemple le groupe méthyle), vinyle, aryle ou un groupe hydrolysable. Les membres préférés appartenant à ce groupe sont les octa-alkylcyclotétrasiloxanes (n = 3), de préférence l'octaméthylcyclotétrasiloxane (OMCTS). Dans certains cas, la couche A et/ou B est issue d'un mélange d'un certain nombre de composés de formule (4) où n peut varier dans les limites indiquées ci-dessus.

Selon un second mode de réalisation, le composé A et/ou B contient dans sa structure au moins un groupe Si-X', où X' est un groupe hydroxy ou un groupe hydrolysable, qui peut être choisi, sans limitation, parmi les groupes H, halogène, alcoxy, aryloxy, acyloxy, -NR¹R² où R¹ et R² désignent indépendamment un atome d'hydrogène, un groupe alkyle ou un groupe aryle, et - N(R³)-Si où R³ désigne un atome d'hydrogène, un groupe alkyle ou un groupe aryle.

Selon ce second mode de réalisation de l'invention, le composé A et/ou B contient de préférence dans sa structure au moins un groupe Si-H, c'est-à-dire constitue un hydrure de silicium. De préférence, l'atome de silicium du groupe Si-X' n'est pas lié à plus de deux groupes non hydrolysables tels que des groupes alkyle ou aryle.

Parmi les groupes X', les groupes acyloxy ont préférentiellement pour formule -OC(O)R⁴ où R⁴ est un groupe aryle préférentiellement en C6-C12, éventuellement substitué par un ou plusieurs groupes fonctionnels, ou alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle, les groupes aryloxy et alcoxy ont pour formule -O-R⁵ où R⁵ est un groupe aryle préférentiellement en C6-C12, éventuellement substitué par un ou plusieurs groupes fonctionnels, ou alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle, les halogènes sont préférentiellement F, Cl, Br ou I, les groupes X' de formule -NR¹R² peuvent désigner un groupe amino NH₂, alkylamino, arylamino, dialkylamino, diarylamino, R¹ et R² désignant indépendamment un atome d'hydrogène, un groupe aryle préférentiellement en C6-C12, éventuellement substitué par un ou plusieurs groupes fonctionnels, ou un groupe alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle, les groupes X' de formule -N(R³)-Si sont rattachés à l'atome de silicium par l'intermédiaire de leur atome d'azote et leur atome de silicium comporte naturellement trois autres substituants, où R³ désigne un atome d'hydrogène, un groupe aryle préférentiellement en C6-C12, éventuellement substitué par un ou plusieurs groupes fonctionnels, ou un groupe alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle.

Le groupe acyloxy préféré est le groupe acétoxy. Le groupe aryloxy préféré est le groupe phénoxy. Le groupe halogène préféré est le groupe Cl. Les groupes alcoxy préférés sont les groupes méthoxy et éthoxy.

Dans le second mode de réalisation, le composé A et/ou B comporte de préférence au moins un atome de silicium porteur d'au moins un groupe alkyle, de préférence en C1-C4 linéaire ou ramifié, mieux au moins un atome de silicium porteur d'un ou de deux groupes alkyle identiques ou différents, de préférence en C1-C4, et d'un groupe X' (de préférence un atome d'hydrogène) directement lié à l'atome de silicium, X' ayant la signification indiquée précédemment. Le groupe alkyle préféré est le groupe méthyle. Le groupe vinyle peut également être utilisé à la place d'un groupe alkyle. De préférence, l'atome de silicium du groupe Si-X' est directement lié à au moins un atome de carbone.

De préférence, chaque atome de silicium du composé A et/ou B n'est pas lié directement à plus de deux groupes X', mieux n'est pas lié directement à plus d'un groupe X' (de préférence un atome d'hydrogène), mieux, chaque atome de silicium du composé A et/ou B est lié directement à un seul groupe X' (de préférence un atome d'hydrogène). De préférence, le composé A et/ou B comporte un ratio atomique Si/O égal à 1. De préférence, le composé A et/ou B comporte un ratio atomique C/Si <2, préférentiellement ≤ 1,8, mieux ≤ 1,6 et mieux encore ≤ 1,5, ≤ 1, 3 et de façon optimale égal à 1. De préférence encore, le composé A et/ou B comporte un ratio atomique C/O égal à 1. Selon un mode de réalisation, le composé A et/ou B ne comporte pas de groupe Si-N, mieux ne comporte pas d'atome d'azote.

Le ou les atomes de silicium du composé A et/ou B précurseur sont de préférence uniquement liés à des groupes alkyle, hydrogène et/ou des groupes comportant un chaînon -O-Si ou -NH-Si de façon à former un groupe Si-O-Si ou Si-NH-Si. Dans un mode de réalisation, le composé A et/ou B comporte au moins un groupe Si-O-Si-X' ou au moins un groupe Si-NH-SiX', X' ayant la signification indiquée précédemment et représentant de préférence un atome d'hydrogène.

Selon ce second mode de réalisation, le composé A et/ou B est de préférence un composé de formule (3) dans laquelle l'un au moins de R'¹ à R'⁴ désigne un groupe X' (de préférence un atome d'hydrogène), X' ayant la signification indiquée précédemment.

Selon ce second mode de réalisation, le composé A et/ou B est préférentiellement un polysiloxane cyclique de formule (5) : 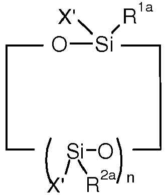 où X' a la signification indiquée précédemment et représente de préférence un atome d'hydrogène, n désigne un entier allant de 2 à 20, de préférence de 3 à 8, R^{1a} et R^{2a} représentent indépendamment un groupe alkyle de préférence en C1-C4 (par exemple le groupe méthyle), vinyle, aryle ou un groupe hydrolysable. Des exemples non limitatifs de groupes X' hydrolysables sont les groupes chloro, bromo, alcoxy, acyloxy, aryloxy, H. Les membres les plus courants appartenant à ce groupe sont les tétra-, penta- et hexa-alkylcyclotétrasiloxanes, de préférence les tétra-, penta- et hexa-méthylcyclotétrasiloxanes, le 2,4,6,8-tétraméthylcyclotétrasiloxane (TMCTS) étant le composé préféré. Dans certains cas, la couche A et/ou B est issue d'un mélange d'un certain nombre de composés ayant la formule ci-dessus où n peut varier dans les limites indiquées ci-dessus.

Selon un autre mode de réalisation, le composé A et/ou B est un alkylhydrosiloxane linéaire, mieux un méthylhydrosiloxane linéaire tel que par exemple le 1,1,1,3,5,7,7,7-octaméthyl tétrasiloxane, le 1,1,1,3,5,5,5-heptaméthyltrisiloxane, le 1,1,3,3,5,5-hexaméthyl trisiloxane.

Des exemples non-limitatifs de composés organiques A et/ou B précurseurs, cycliques ou non cycliques, conformes au second mode de réalisation, sont les composés suivants : le 2,4,6,8-tétraméthylcyclotétrasiloxane (TMCTS de formule (1)), le 2,4,6,8-tétraéthylcyclotétrasiloxane, le 2,4,6,8-tétraphénylcyclotétrasiloxane, le 2,4,6,8-tétraoctylcyclotétrasiloxane, le 2,2,4,6,6,8-hexaméthylcyclotétrasiloxane, le 2,4,6-triméthylcyclotrisiloxane, le cyclotétrasiloxane, le 1,3,5,7,9-pentaméthyl cyclopentasiloxane, le 2,4,6,8,10-hexaméthylcyclohexasiloxane, le 1,1,1,3,5,7,7,7-octaméthyl tétrasiloxane, le 1,1,3,3,5,5-hexaméthyltrisiloxane, le tétraméthyldisiloxane, le tétraéthoxysilane, le vinylméthyldiéthoxysilane, un hexaméthylcyclotrisilazane tel que le 3,4,5,6-hexaméthylcyclotrisilazane ou le 2,2,4,4,6,6-hexaméthylcyclotrisilazane, le 1,1,1,3,5,5,5-heptaméthyl trisiloxane, le tris(triméthylsiloxy)silane (de formule (2)), le 1,1,3,3-tétraméthyldisilazane, le 1,2,3,4,5,6,7,8-octaméthylcyclotétrasilazane, le nonaméthyl trisilazane, le tris(diméthylsilyl)amine, l'hexaméthyldisilazane.

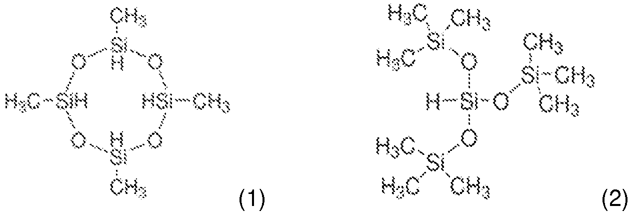

L'utilisation d'au moins un composé organosilicié B pour former la couche B, qui comporte de préférence des liaisons Si-C et éventuellement Si-O, permet de bénéficier de propriétés thermomécaniques améliorées par rapport aux matériaux de haut indice de réfraction traditionnels tels que TiO₂ ou ZrO₂, notamment la tenue à la température et la résistance à la rayure des substrats revêtus par les couches B selon l'invention, pour lesquelles on atteint des niveaux jusque-là inaccessibles par les technologies traditionnelles telles que le dépôt de couches purement inorganiques sous assistance ionique, tout en maintenant un indice de réfraction et une transparence élevés.

Selon un mode de réalisation de l'invention, la couche B comprend plus de 80 % en masse de composés issus du composé B et de l'oxyde métallique selon l'invention, par rapport à la masse totale de la couche B, de préférence plus de 90 %. Selon un mode de réalisation, la couche B est exclusivement formée par dépôt sous vide et sous bombardement ionique d'au moins un oxyde métallique et d'au moins un composé B organosilicié, à l'exclusion de tout autre précurseur.

De préférence, la couche B contient de 5 à 70 % en masse de composés B organosiliciés par rapport à la masse de la couche B.

Les composés inorganiques précurseurs de la couche A (généralement des oxydes métalliques), lorsqu'ils sont présents, le sont dans une proportion telle que la couche A contient de préférence moins de 30 % en masse de composés inorganiques par rapport à la masse de la couche A, de préférence moins de 20 %, de préférence encore moins de 10 %, mieux moins de 5 %. Selon un mode de réalisation préféré, la couche organique-inorganique (ou la couche A) n'est pas formée à partir de composés précurseurs inorganiques (minéraux) tels que des oxydes minéraux et ne contient donc pas de composés inorganiques tels que des oxydes métalliques. Dans ce cas, la couche A est une couche qui contient de préférence uniquement des composés organosiliciés. De préférence, la teneur en composés inorganiques ou oxydes métalliques dans la couche A est inférieure à 10 % en masse par rapport à la masse de la couche A, mieux inférieure à 5 % et encore mieux inférieure à 1 %.

De préférence, la couche A contient plus de 70 % en masse de composés A organosiliciés par rapport à la masse de la couche A, mieux plus de 80 %, encore mieux plus de 90 % et idéalement 100 %.

La couche organique-inorganique possède de préférence une épaisseur allant de 5 à 500 nm, de préférence de 20 à 500 nm, de préférence encore de 25 à 250 nm ou de 10 à 250 nm, mieux de 30 à 200 nm. Dans un mode de réalisation préféré, le revêtement interférentiel contient au moins une couche organique-inorganique ayant une épaisseur supérieure ou égale à 250 nm, mieux supérieure ou égale à 300 nm.

Dans un autre mode de réalisation, la somme des épaisseurs des couches organiques-inorganiques du revêtement interférentiel est supérieure ou égale à 250 nm, mieux supérieure ou égale 300 nm et encore mieux supérieure ou égale à 500 nm.

Lorsqu'elle constitue la couche externe du revêtement interférentiel, la couche organique-inorganique a préférentiellement une épaisseur allant de 60 à 200 nm. La durée du processus de dépôt, les débits et pressions sont ajustés de façon à obtenir les épaisseurs de revêtements désirées.

La nature des composés précurseurs employés, leurs quantités respectives (qui peuvent être modulées en ajustant les débits évaporés), les conditions de dépôt, notamment la durée du dépôt, sont des exemples de paramètres que l'homme du métier saura faire varier pour parvenir au revêtement interférentiel comprenant au moins une couche organique-inorganique présentant l'ensemble des propriétés souhaitées.

Selon l'invention, le procédé mis en oeuvre implique de conformer le film thermoplastique revêtu du revêtement interférentiel multicouche à la forme de l'article d'optique et de le faire adhérer à sa surface. Ledit film est laminé à la surface de l'article d'optique, par collage via une couche adhésive, ladite couche adhésive étant disposée entre l'article d'optique et la surface du film thermoplastique non revêtue du revêtement interférentiel.

Différentes familles d'adhésifs peuvent être mises en oeuvre dans le cadre de l'invention. Ces adhésifs présentent de préférence un module élastique, ou module d'Young, inférieur à celui du substrat et inférieur à celui du film thermoplastique. D'une façon générale l'adhésif présente un module élastique à température ambiante compris entre 10³ et 10⁸ Pa. Les adhésifs selon l'invention sont de préférence les PSA (Pressure Sensitive Adhesives) et les adhésifs thermofusibles (HMA, Hot Melt Adhesives). L'adhésif peut aussi être liquide sans avoir besoin d'être chauffé.

Par PSA, on entend un adhésif de contact sec, généralement de nature viscoélastique, qui ne nécessite qu'une faible pression pour adhérer sur la surface de contact. Les PSA sont caractérisés par le fait qu'ils ne nécessitent pas d'activation par l'eau, un solvant ou par chauffage pour exercer leur caractère adhésif de façon permanente sur une surface de contact. Des exemples de PSA utilisables sont cités dans la demande EP 2524798, au nom du demandeur, de même que les additifs que peuvent contenir ces PSA. D'une façon préférentielle, on utilisera dans le cadre de l'invention un PSA à base de polyacrylate.

La couche de PSA peut être appliquée sur le film en polymère thermoplastique avant ou après application de revêtements fonctionnels sur ce film, de préférence après. Elle peut éventuellement être protégée par une couche à faible adhérence (release layer) qui sera décollée directement avant la mise en oeuvre du procédé.

Il est également possible d'utiliser dans le cadre de l'invention un adhésif thermofusible (HMA), terme qui englobe les HMA classiques qui peuvent fondre et durcir un grand nombre de fois, mais également les HMA réactifs qui sont appliqués comme des HMA classiques mais réticulent et forment ainsi des liaisons adhésives permanentes qu'il est impossible de faire fondre une nouvelle fois. Des exemples de HMA utilisables sont cités dans la demande EP 2524798, au nom du demandeur, de même que les additifs que peuvent contenir ces HMA. D'une façon préférentielle, on utilisera dans le cadre de l'invention un adhésif thermofusible à base de polyuréthanes qui se présentent sous la forme d'une dispersion aqueuse de polyuréthanes de haut poids moléculaire.

Pour l'application envisagée dans la présente invention, il est important de choisir l'adhésif de manière à ne pas réduire de façon indésirable la transparence de l'article optique obtenu. La couche d'adhésif peut bien entendu présenter un aspect trouble avant application sur le substrat mais ce trouble doit disparaître après collage.

L'épaisseur de la couche d'adhésif varie généralement de 10 à 50 µm, de préférence de 15 à 30 µm.

La couche adhésive peut être appliquée sur la face du film thermoplastique opposée à celle qui comporte le revêtement interférentiel, ou bien sur le substrat de l'article d'optique. Dans un second temps, le film thermoplastique est laminé sur le substrat de l'article d'optique.

Selon un mode de réalisation de l'invention, le procédé comprend les étapes suivantes :
b1) thermoformer ledit film thermoplastique revêtu fourni à l'étape a) de façon à le conformer à la géométrie de la surface de l'article d'optique, généralement en faisant subir à ce film un taux de déformation supérieur ou égal à 1 % sur au moins une partie de sa surface, et
b2) appliquer sur le substrat de l'article d'optique ledit film thermoplastique obtenu à l'étape b1) en le faisant adhérer au moyen de la couche d'adhésif.

Cette étape de thermoformage, qui précède l'étape de lamination, est de préférence réalisée à une température inférieure à la température de transition vitreuse du polymère ou mélange de polymères composant le film thermoplastique. Elle a essentiellement pour but de donner au film revêtu une forme similaire à celle de la surface sur laquelle il sera collé, afin d'éviter des contraintes, des plis ou l'endommagement du film multicouche lors de l'étape de collage.

Le thermoformage convertit donc le film thermoplastique revêtu plan ou sensiblement plan en un film courbé, lequel conserve cette forme une fois refroidi. Il est également possible de laminer un film thermoplastique revêtu chauffé, ledit film subissant la déformation le conformant à la géométrie de la surface du substrat pendant l'étape de lamination.

Le thermoformage et la lamination/collage à la surface de l'article d'optique de rayon de courbure non nul du film thermoplastique revêtu sur le substrat de l'article d'optique peuvent être mis en oeuvre selon des techniques et en utilisant des dispositifs connus dans l'art. On peut citer à titre d'exemples de tels procédés ceux décrits en détail dans les demandes EP 2018262, EP 2524798, WO 2006/105999 et WO 2009/021793, au nom du demandeur.

Selon la méthode présentée dans la demande WO 2006/105999, le substrat ayant une face courbe est positionné sur un porte-substrat à l'intérieur d'une enceinte. Le film fonctionnel plan est positionné dans un porte-film à l'extrémité supérieure de l'enceinte pour fermer cette enceinte, puis l'enceinte est positionnée à la verticale d'un tampon flexible (déformable) avec alignement de leurs centres géométriques respectifs. Le film thermoplastique initialement plan est préformé à chaud en appliquant le tampon flexible sur le film, l'enceinte est mise en dépression entraînant la mise en contact du substrat et du film thermoplastique par leurs centres géométriques respectifs du côté de la face courbe du substrat, et le tampon flexible est translaté verticalement, entraînant l'établissement d'un contact conformai entre le film fonctionnel et le substrat du côté de sa face courbe. Ce procédé induit des taux de déformation dans le film qui peuvent atteindre 10 %.

La méthode de report de film présentée dans la demande WO 2009/021793 (cf. figures 4-6 de cette demande) est semblable, l'immobilisation directe du film fonctionnel par le porte-film suivant un contour annulaire étant remplacée par l'immobilisation de ce film fonctionnel sur un support (membrane auxiliaire ou film auxiliaire) déformable initialement plan. Le film fonctionnel est retenu immobilisé sur une face de la membrane auxiliaire (de plus grande dimension que le film fonctionnel, cf. figure 1b de WO 2009/021793) au moyen d'une couche de liaison configurée pour que le film fonctionnel ait une forme qui varie conformément à la déformation de la membrane, le film fonctionnel restant alors parallèle à la membrane auxiliaire, seule la membrane auxiliaire étant maintenue par le porte-film à son pourtour, le film fonctionnel n'étant maintenu en contact avec la membrane auxiliaire que par la couche de liaison.

Dans la mesure où le film fonctionnel n'est nullement maintenu à sa périphérie par des moyens mécaniques selon le procédé de lamination décrit dans la demande WO 2009/021793, il peut glisser sur la membrane support pendant que la déformation du film auxiliaire est générée. De ce fait, ce second procédé engendre de plus faibles déformations dans le film fonctionnel que si l'on déforme directement le film fonctionnel comme exposé dans le premier procédé de lamination décrit dans la demande WO 2006/105999. Il est toutefois possible d'obtenir des taux de déformation supérieurs ou égaux à 1 %, notamment lorsque l'on agrandit le film fonctionnel par rapport au support, ce qui a pour effet d'augmenter la déformation.

La mise en oeuvre du procédé de report décrit par la demande de brevet WO 2009/021793 s'effectue :
- comme dans la demande de brevet WO 2006/105999, c'est-à-dire qu'on utilise un tampon flexible 201 (figure 6 de WO 2009/021793) pour opérer le préformage à chaud du film fonctionnel qui lui donne une courbure dont la convexité est tournée vers la face courbe du substrat, on met alors en contact le centre de la face convexe du film fonctionnel avec le centre de la face courbe convexe du substrat, et on applique ensuite le film fonctionnel avec le tampon flexible en inversant sa courbure afin de diffuser progressivement, radialement à partir du centre du film fonctionnel jusqu'à sa périphérie le contact conformai entre le film fonctionnel et le substrat ; ou
- en variante, on n'utilise pas de tampon flexible (figure 4 de WO 2009/021793) et la dépression dans l'enceinte est remplacée par une surpression pour opérer le préformage à chaud du film fonctionnel qui lui donne donc une courbure dont la concavité est tournée vers la face courbe du substrat, on met alors en contact le centre de la face concave du film fonctionnel avec le centre de la face courbe convexe du substrat et on applique ensuite le film, sans inverser sa courbure, en entrainant le substrat vers le film, afin de diffuser progressivement, radialement à partir du centre du film jusqu'à sa périphérie le contact conformai entre le film fonctionnel et le substrat.

Pour des articles d'optique dont la courbure est faible, il est possible d'utiliser le procédé de la demande WO 2006/105999 (qui engendre des déformations plus élevées) et ainsi recouvrir la totalité de la surface du substrat de l'article. Pour des articles d'optique dont la courbure est plus forte, il est recommandé d'avoir recours au procédé de la demande WO 2009/021793 (qui engendre des déformations plus faibles mais qui ne permet pas de couvrir la totalité de la surface de l'article d'optique). Cependant, grâce à l'utilisation d'un revêtement interférentiel comportant au moins une couche organique-inorganique, il est possible d'utiliser ce second procédé pour des articles d'optique ayant une gamme de courbure plus large que si le revêtement interférentiel ne comportait pas de couches organiques-inorganiques, dans le sens où l'on peut travailler avec des articles d'optique de courbures plus élevées sans risquer de fissurer le revêtement interférentiel. Il est également possible d'avoir recours à un film thermoplastique revêtu de dimensions plus larges. L'invention permet donc d'élargir notablement la gamme de travail en termes de courbure et de surface d'article d'optique recouverte.

Comme le montre la figure 2 de la demande WO 2009/021793, lorsque le film fonctionnel est retenu immobilisé sur une face de la membrane auxiliaire, l'article d'optique est typiquement revêtu d'une couche d'adhésif liquide ou sensible à la pression (PSA), du film thermoplastique fonctionnel en contact avec la couche de liaison du support (membrane auxiliaire ou film auxiliaire).

Après retrait du support et de la couche de liaison, on obtient un article d'optique auquel adhère le film thermoplastique fonctionnel par l'intermédiaire d'une couche d'adhésif liquide durci (HMA) ou d'adhésif sensible à la pression.

La lamination sur au moins une partie de la surface de l'article d'optique du film thermoplastique revêtu nécessite de le conformer à la géométrie de la surface de l'article d'optique, ce qui engendre généralement une déformation de ce film, entre son état initial plan (ou sensiblement plan) et son état courbé assujetti à la face courbe de l'article d'optique, qui présente un rayon de courbure non nul. Le rayon de courbure de la surface de l'article d'optique sur laquelle a lieu la lamination varie généralement de 48 à 350 mm. Cette surface peut être convexe ou concave. L'article optique a généralement un diamètre compris entre 55 et 90 mm.

La lamination est préférentiellement réalisée en faisant subir ou après avoir fait subir à ce film un taux de déformation supérieur ou égal à 1 % sur au moins une partie de sa surface, de façon à le conformer à la géométrie de la surface dudit article d'optique. Ce taux de déformation est préférentiellement supérieur ou égal à l'une des valeurs suivantes : 1,1 %, 1,2 %, 1,3 %, 1,4 %, 1,5 %, 2 %.

La figure 1 montre un exemple de répartition des déformations subies par la surface d'un film thermoplastique initialement plan après son application à la surface d'un article d'optique ayant un rayon de courbure non nul. Plus les hachures sont rapprochées, plus la valeur du taux de déformation obtenue est élevée. On constate que la déformation est maximale dans une zone centrale 37 de la surface du film thermoplastique, et qu'à l'exception de certaines zones locales, la déformation décroît vers le bord du film.

La représentation de ces déformations, donnée sur la figure 1 sous la forme d'une carte 36, a été obtenue en utilisant la technique décrite dans la demande de brevet français déposé sous le numéro FR1454589, basée sur l'emploi d'un système de mesure de déformations comportant un dispositif de prises de vue comportant deux caméras prenant des images distinctes afin de permettre une reconstruction tridimensionnelle, et un logiciel d'analyse des images fournies par les caméras, notamment le système de mesure par stéréo-corrélation d'images commercialisé sous le nom de ARAMIS par la société GOM. Grâce à la présence des deux caméras, il est possible de quantifier les déplacements à la surface du film suivant les trois directions de l'espace, grâce à la comparaison entre les images prises par les deux caméras de la surface du film à l'état initial plan et à l'état reporté sur la surface de l'article d'optique courbe.

En tout point de la surface, le taux de déformation selon l'invention correspond à la composante de la déformation exprimée suivant une direction de l'espace telle que la déformation est maximale en ce point pour le matériau dans cette direction.

Selon un mode de réalisation de l'invention, le procédé de préparation se traduit par le fait qu'au moins une partie du spectre de réflexion dans le domaine visible du revêtement interférentiel multicouche présent sur le film thermoplastique fourni à l'étape a) est déplacée vers les longueurs d'onde courtes sous l'effet de la déformation induite par la conformation du film thermoplastique revêtu à la géométrie de la surface dudit article d'optique.

Lors de la déformation du film thermoplastique revêtu du revêtement interférentiel, le positionnement de son spectre de réflexion peut être modifié du fait d'un étirement des couches qui peut se traduire par une diminution d'épaisseur de l'empilement multicouche. Cette variation d'épaisseur est de préférence inférieure à 7 %, mieux inférieure à 5 %. Elle entraine un décalage du spectre de réflexion sur l'ensemble du spectre visible vers les longueurs d'ondes plus courtes. De préférence, le décalage/déplacement du spectre de réflexion dans le domaine visible subi par le revêtement interférentiel multicouche entre l'état initial (revêtement présent sur le film thermoplastique fourni à l'étape a) et l'état final (revêtement présent sur le film thermoplastique laminé à l'issue de l'étape b) est inférieur ou égal à 70 nm, mieux inférieur ou égal à 50 nm et encore mieux inférieur ou égal à 30 nm.

Habituellement, on réalise la conception d'un revêtement interférentiel sur la base d'un cahier des charges donné, par exemple au travers de simulations numériques, et l'on dépose sur un film thermoplastique un revêtement ayant un ensemble propriétés optiques voulues en vue de l'appliquer sur un article d'optique par lamination. Après lamination, ces propriétés optiques sont cependant décalées vers un ensemble de valeurs plus ou moins éloignées de la cible, du fait notamment de la modification des épaisseurs des couches de l'empilement induite par le procédé de lamination.

Dans le mode de réalisation de l'invention décrit ci-dessus, on peut anticiper le déplacement du spectre de réflexion dans le domaine visible du film interférentiel induit par le procédé de lamination et notamment par la déformation du film thermoplastique revêtu en vue de le conformer à la géométrie de la surface de l'article d'optique en concevant un revêtement interférentiel déposé sur le film thermoplastique fourni à l'étape a) qui tient compte du déplacement de spectre qui va être provoquée par la mise en forme du film revêtu. Ce revêtement interférentiel, dans son état initial (étape a) possède un spectre de réflexion volontairement différent du spectre de réflexion souhaité mais dont on sait qu'après mise en forme, notamment par thermoformage, il sera décalé de façon adéquate.

La structure du revêtement interférentiel devant être déposé sur le film thermoplastique pour conduire après mise en forme au spectre de réflexion désiré peut être anticipée par l'homme du métier en réalisant des expériences préparatoires, en utilisant notamment la méthode décrite dans la demande déposée sous le numéro FR1454590, au nom du demandeur ou par simulation.

En connaissant les propriétés mécaniques, notamment le coefficient de Poisson des matériaux constituant les couches minces, il est possible de calculer un changement d'épaisseur pour une déformation "latérale" subie.

On calcule les épaisseurs finales nécessaires pour obtenir les propriétés optiques recherchées, de façon classique (logiciel commercial, MacLeod ou autre). Ensuite, on rajoute pour toutes les épaisseurs les changements calculés à partir des déformations connues, en prenant en compte le coefficient de Poisson, s'il est connu, ou en utilisant un coefficient de Poisson estimé (à partir de la littérature) et on évalue l'écart de performance par rapport à la ou les propriétés optiques souhaitées. On peut ainsi anticiper les variations des propriétés optiques.

Lorsque les déformations ne sont pas uniformes sur l'ensemble de l'article, l'homme du métier peut prendre en compte la plus haute déformation et la plus basse déformation et simuler les propriétés optiques (antireflet en particulier).

L'homme du métier peut au final retenir l'une ou l'autre des déformations ou une valeur moyenne.

Selon un autre mode de réalisation de l'invention, le revêtement interférentiel de l'article d'optique récupéré à l'étape c) présente une propriété optique souhaitée ayant la valeur V, la valeur de ladite propriété optique du revêtement interférentiel présent sur le film thermoplastique qui avait été fourni à l'étape a) étant différente de V, de façon à tenir compte de la déformation induite par la lamination du film thermoplastique revêtu sur la surface dudit article d'optique (et notamment de sa conformation à la géométrie de la surface dudit article d'optique), qui a pour effet de modifier la valeur de cette propriété optique.

Dans le mode de réalisation de l'invention décrit ci-dessus, on anticipe le décalage des propriétés optiques du film interférentiel induit par le procédé de lamination et notamment par la déformation du film thermoplastique revêtu en vue de le conformer à la géométrie de la surface de l'article d'optique. Ainsi, le revêtement interférentiel déposé sur le film thermoplastique fourni à l'étape a) est conçu pour tenir compte de la variation qui va être provoquée par la mise en forme du film revêtu. Ce revêtement interférentiel, dans son état initial (étape a) possède une propriété optique dont la valeur V+ε est volontairement différente de la propriété optique finale souhaitée (ε désignant l'écart volontairement appliqué par rapport à la valeur de la propriété optique souhaitée), mais dont on sait qu'après mise en forme, notamment par thermoformage, elle sera décalée vers la valeur souhaitée V (à l'issue de l'étape b). La valeur de l'écart à appliquer à la propriété optique peut être anticipée par l'homme du métier en réalisant des expériences préparatoires. De préférence, cet écart ε est inférieur ou égal à 5 % de la valeur V.

Cette valeur V peut notamment être une valeur de Rm et/ou Rv définis dans la présente demande.

Lorsque l'on réalise un thermoformage du film thermoplastique revêtu, la valeur V souhaitée pour la propriété optique en question peut être atteinte ou non à l'issue de l'étape de thermoformage, l'étape d'application du film sur le substrat pouvant en effet continuer à modifier (ou non) la valeur de ladite propriété optique.

Parmi ses propriétés avantageuses, l'article selon l'invention possède une résistance accrue à la courbure et au craquèlement du revêtement interférentiel. La résistance à la courbure de l'article selon l'invention peut être évaluée au moyen du test de résistance à la courbure décrit dans la demande WO 2013/098531. Le mode de sollicitation de ce test est représentatif de la sollicitation chez l'opticien pour le montage du verre, c'est-à-dire la "compression" du verre pour l'insérer dans une monture métallique. Le résultat du test est la déformation critique D en mm que peut subir le verre avant l'apparition de fissures. Plus la valeur de la déformation est élevée, meilleure est la résistance à la déformation mécanique appliquée. D'une manière générale, les revêtements interférentiels selon l'invention ont des valeurs de déformation critique variant de 0,5 à 1,9 mm, mieux de 0,8 mm à 1,6 mm et encore mieux de 0,9 à 1,5 mm.

La température critique d'un article revêtu selon l'invention est de préférence supérieure ou égale à 60°C, mieux supérieure ou égale à 70°C,encore mieux supérieure ou égale à 80°C et idéalement supérieure ou égale à 90°C. Dans la présente demande, la température critique d'un article ou d'un revêtement est définie comme étant celle à partir de laquelle on observe l'apparition de craquelures dans l'empilement présent à la surface du substrat, ce qui traduit une dégradation du revêtement. La température critique de l'article est déterminée selon le protocole indiqué dans la demande WO 2008/001011. Cette température critique élevée est due à la présence de la couche organique-inorganique à la surface de l'article. Par ailleurs, cette couche possède une aptitude plus faible à se charger en eau que des couches inorganiques évaporées, et une excellente stabilité dans le temps de ses propriétés optiques.

Grâce à ses propriétés thermomécaniques améliorées, la couche organique-inorganique selon l'invention peut notamment être appliquée sur une seule face d'une lentille semi-finie, généralement sa face avant, l'autre face de cette lentille devant encore être usinée et traitée. L'empilement présent sur la face avant de la lentille ne sera pas dégradé par l'accroissement de température générée par les traitements que subira la face arrière lors du durcissement des revêtements qui auront été déposés sur cette face arrière ou toute autre action susceptible d'augmenter la température de la lentille.

De préférence, le facteur moyen de réflexion lumineuse Rv est inférieur ou égal à 2,5% par face. Rv, est tel que défini dans la norme ISO 13666:1998 et mesuré selon la norme ISO 8980-4 à un angle d'incidence de 15°. De préférence Rv est inférieur à 2 % par face et encore mieux inférieur à 1 % par face, et mieux inférieur ou égal à 0,7% par face de l'article.

De préférence, le facteur moyen de réflexion dans le domaine visible (400-700 nm) d'un article revêtu d'un revêtement interférentiel selon l'invention, noté Rₘ, est inférieur à 2,5 % par face, mieux inférieur à 2 % par face et encore mieux inférieur à 1 % par face de l'article. Dans un mode de réalisation optimal, l'article comprend un substrat dont les deux surfaces principales sont revêtues d'un revêtement interférentiel selon l'invention et présente une valeur de Rₘ totale (cumul de réflexion due aux deux faces) inférieure à 2%. Les moyens pour parvenir à de telles valeurs de Rₘ sont connus de l'homme du métier.

Dans la présente demande, le "facteur moyen de réflexion" Rₘ (moyenne de la réflexion spectrale sur l'ensemble du spectre visible entre 400 et 700 nm) est tel que défini dans la norme ISO 13666:1998, et mesuré conformément à la norme ISO 8980-4.

Dans certaines applications, il est préférable que la surface principale du substrat soit revêtue d'un ou plusieurs revêtements fonctionnels préalablement au dépôt du revêtement interférentiel. Ces revêtements fonctionnels classiquement utilisés en optique peuvent être, sans limitation, une couche de primaire améliorant la résistance au choc et/ou l'adhésion des couches ultérieures dans le produit final, un revêtement anti-abrasion et/ou anti-rayure, un revêtement polarisé, un revêtement photochrome, électrochrome ou un revêtement coloré, en particulier une couche de primaire revêtue d'un revêtement anti-abrasion et/ou anti-rayure tels que ceux décrits plus haut. Il est à noter que si un revêtement anti-abrasion et/ou anti-rayure est présent sur le film thermoplastique, il n'est pas utile d'en prévoir un second en dessous de ce film, dans l'ordre d'empilement. De même, le film thermoplastique selon l'invention collé via une couche adhésive sur le substrat de l'article d'optique peut remplacer dans certains cas le primaire traditionnellement employé pour améliorer la résistance au choc et/ou l'adhésion.

L'article selon l'invention peut également comporter des revêtements formés sur le revêtement interférentiel, capables de modifier ses propriétés de surface, tels qu'un revêtement hydrophobe et/ou oléophobe (top coat antisalissure) ou un revêtement antibuée. Ces revêtements sont de préférence déposés sur la couche externe du revêtement interférentiel. Leur épaisseur est en général inférieure ou égale à 10 nm, de préférence de 1 à 10 nm, mieux de 1 à 5 nm. Ils sont respectivement décrits dans les demandes WO 2009/047426 et WO 2011/080472.

De préférence, les revêtements destinés à figurer sur le revêtement interférentiel dans l'article d'optique final sont déposés sur celui-ci avant l'étape de lamination, alors qu'il est encore supporté par le film thermoplastique. En d'autres termes, le film thermoplastique selon l'invention peut être utilisé pour conférer à un article d'optique de nombreuses fonctionnalités telles qu'une fonction anti-abrasion, anti-rayure, antibuée et/ou antisalissure.

Typiquement, un article selon l'invention comprend un substrat successivement revêtu, d'une couche d'adhésif, du film thermoplastique, d'un revêtement anti-abrasion et/ou anti-rayure et du revêtement interférentiel multicouche comprenant au moins une couche organique-inorganique, et d'un revêtement hydrophobe et/ou oléophobe.

L'invention concerne également un article d'optique ayant un rayon de courbure non nul comprenant un substrat sur lequel sont déposés une couche d'adhésif, un film thermoplastique et un revêtement interférentiel multicouche, ledit film thermoplastique adhérant à la surface de la lentille au moyen de ladite couche d'adhésif disposée entre l'article d'optique et la surface du film thermoplastique non revêtue du revêtement interférentiel, ledit revêtement interférentiel comprenant au moins une couche ayant un indice de réfraction supérieur à 1,65 et au moins une couche ayant un indice de réfraction inférieur ou égal à 1,65, l'une au moins des couches du revêtement interférentiel étant une couche de nature organique-inorganique ayant été déposée sous vide, l'article en question ayant été obtenu selon le procédé décrit ci-dessus, par lamination sur l'article d'optique, au moyen de ladite couche d'adhésif, dudit film thermoplastique revêtu dudit revêtement interférentiel multicouche, généralement en faisant subir ou après avoir fait subir à ce film un taux de déformation supérieur ou égal à 1 % sur au moins une partie de sa surface de façon à le conformer à la géométrie de la surface dudit article d'optique.

En outre, l'invention concerne un article d'optique ayant un rayon de courbure non nul comprenant un substrat sur lequel sont déposés une couche d'adhésif, un film thermoplastique et un revêtement interférentiel multicouche, ledit film thermoplastique adhérant à la surface de la lentille au moyen de ladite couche d'adhésif disposée entre l'article d'optique et la surface du film thermoplastique non revêtue du revêtement interférentiel, ledit revêtement interférentiel comprenant au moins une couche ayant un indice de réfraction supérieur à 1,65 et au moins une couche ayant un indice de réfraction inférieur ou égal à 1,65, l'une au moins des couches du revêtement interférentiel étant une couche de nature organique-inorganique ayant été déposée sous vide.

Enfin, l'invention concerne un film thermoplastique revêtu d'un revêtement interférentiel multicouche, ledit revêtement interférentiel comprenant au moins une couche ayant un indice de réfraction supérieur à 1,65 et au moins une couche ayant un indice de réfraction inférieur ou égal à 1,65, l'une au moins des couches du revêtement interférentiel étant une couche de nature organique-inorganique ayant été déposée sous vide.

L'invention est illustrée de façon non limitative par les exemples suivants.

### EXEMPLES

Les exemples ci après illustrent des films et procédés spécifiques utilisables dans le cadre de l'invention.

### 1- Réalisation d'un film antireflet avec une couche organique-inorganique

On utilise en tant que film thermoplastique transparent un film en triacétate de cellulose (FT 80 SZ commercialisé par la société Fuji) d'une épaisseur de 80 µm et d'une température de transition vitreuse, déterminée par analyse mécanique dynamique (DMA Dynamic Mecanical Analysis), de 170 °C. On soumet la surface de ce flm à un nettoyage par traitement avec une solution aqueuse de soude, concentrée à 10 %, à 60°C pendant 4 minutes, suivi d'une étape de rinçage à l'eau adoucie et de séchage à l'air chaud (60°C).

Optionnellement, au moins une des surfaces de ce film peut comporter un revêtement par dépôt sur cette surface, par centrifugation, d'une solution thermodurcissable pour revêtement anti-abrasion (comprenant, par rapport au poids total de la composition, 22 % de glycidoxypropylméthyldiméthoxysilane, 62 % de silice colloïdale contenue à 30 % dans du méthanol, et 0,70 % d'aluminium acétylacétonate). La couche anti-abrasion a une épaisseur d'environ 4 µm. Cette couche est ensuite soumise à une réticulation par chauffage pendant 3 heures à 100°C. La solution thermodurcissable et le procédé d'obtention du revêtement anti-abrasion sont décrits à l'exemple 3 du brevet EP 0614957B1.

On dépose sous vide sur une des surfaces de ce film, directement ou sur le revêtement anti-abrasion si le film en comporte un, un revêtement interférentiel antireflet comportant une couche organique /inorganique.

### 1.1-Equipement

Pour le dépôt sous vide des antireflets selon l'invention, on utilise une machine de dépôt commerciale (Leybold LAB 1100 +), équipée d'un canon à électrons, d'un évaporateur thermique, d'un canon à ions KRI EH 1000 F (de la société Kaufman &Robinson Inc.), et d'un système d'introduction de liquide de la société Diamonex. Ce système comprend un réservoir pour un précurseur (précurseur utilisé OMCTS), un débitmètre liquide, et un vaporiseur qui se trouve dans la machine, et qui est porté à une température de 180 °C. La vapeur de précurseur sort d'un tuyau en cuivre à l'intérieur de la machine, à une distance de ∼ 50 cm du canon à ions. Des débits d'oxygène et d'argon sont introduits à l'intérieur du canon à ions.

### 1.2-Procédé général de dépôt

### Pour le dépôt d'un empilement:

On effectue un pompage primaire, puis un pompage secondaire pendant 400 s (pression ∼ 2 10⁻⁵ mbar, lue sur une jauge de pression capacitive), préchauffage du vaporiseur à la température choisie (∼ 5 min),
Le film est ensuite soumis à un prétraitement par bombardement ionique Ion Pre Cleaning (IPC) "classique" en utilisant de l'AR.

Dans le cas où on souhaite évaporer des couches inorganiques, on arrête le canon à ions; si on souhaite poursuivre avec une couche organique-inorganique, le canon reste allumé. Si souhaité, évaporation d'une (ou plusieurs) couche inorganique à l'aide du canon à électrons jusqu'à obtention de l'épaisseur désirée pour chaque couche.
Si le canon à ions n'est pas en fonctionnement, on le démarre avec de l'argon._Ensuite, ajout d'oxygène dans le canon à ions, avec un débit programmé, puis, si nécessaire (si différent de l'IPC), on programme le courant d'anode souhaité.
Le précurseur OMCTS est ensuite ajouté (débit liquide programmé). L'épaisseur du dépôt est mesurée en temps réel avec le quartz de mesure (microbalance). Une fois l'épaisseur souhaitée obtenue, le débit de précurseur est stoppé, puis le canon à ions également.
Si souhaité, d'autres couches inorganiques peuvent être évaporées à l'aide du canon à électrons. Optionnellement, un Top coat hydrophobe peut être déposé sur la dernière couche de l'empilement.
Les conditions de dépôt des couches inorganiques (std) sont celles figurant dans le mode opératoire détaillé de la demande de brevet WO2013098531.

### 1.3 Exemples d'empilement

Les exemples prennent en compte le cas où la couche organique-inorganique remplace la dernière couche optique de bas indice de réfraction de l'empilement antireflet, ou une partie de cette couche.

En utilisant les paramètres 0,3 g / min (20 sccm) OMCTS, 0 sccm Ar, et 20 sccm O₂, courant d'anode 3A pour la couche organique-inorganique, les empilements de structures suivantes ont été déposés :

**Structure A :**

| Structure | Matériau | Epaisseur [nm] |
|---|---|---|
| Topcoat | std | std |
| Couche 4 | Organique-inorganique | 80 |
| Couche Antistatique | ITO | 6 |
| Couche 3 | ZrO₂ (évap) | 80 |
| Couche 2 | SiO₂ (évap) | 25 |
| Couche 1 | ZrO₂ (évap) | 20 |

**Structure B:**

| Structure | Matériau | Epaisseur [nm] |
|---|---|---|
| Topcoat | std | std |
| Couche 4 | SiO₂ (évap) | 10 |
| | Organique-inorganique | 70 |
| Couche antistatique | ITO | 6 |
| Couche 3 | ZrO₂ (évap) | 80 |
| Couche 2 | SiO₂ (évap) | 25 |
| Couche 1 | ZrO₂ (évap) | 20 |

### Gammes de paramètres générales programmés pour le dépôt des couches organique-inorganique du précurseur dans les empilements structure A et B:

Débits OMCTS : 0.1 - 0.8 g/min (1 à 50 sccm)
Température du vaporiseur: 80 °C - 200 °C (à choisi en fonction du débit de OMCTS)
Débits d'Argon : 0 - 30 sccm
Débits d'oxygène: 5 - 30 sccm (le débit d'oxygène est augmenté si l'on augmente le débit d'OMCTS, pour garantir la transparence de la couche)
Courant d'anode: 2 - 4 A Courant d'émission: = courant d'anode + (5 - 15 %).

**Exemple comparatif 1**

| Structure | Matériau | Epaisseur [nm] | Conditions |
|---|---|---|---|
| Topcoat | std | std | std |
| Couche 4 | SiO₂ (évap) | 80 | std |
| Couche AS | ITO (évap) | 6 | std |
| Couche 3 | ZrO₂ (évap) | 80 | std |
| Couche 2 | SiO₂ (évap) | 25 | std |
| Couche 1 | ZrO₂ (évap) | 20 | std |

On soumet ensuite la face opposée des films ainsi obtenus à un traitement de surface par plasma d'oxygène sous pression réduite, puis on lui applique une couche de PSA acrylique NITTO DENKO CS9621 en une épaisseur d'environ 25 µm.

### 2-Lamination

On utilise une lentille ophtalmique verre organique en polythiouréthane thermodurci ayant un indice de réfraction de 1,6 commercialisé par Essilor sous la dénomination Ormix® (MR8 +0.00D base 4,5, dont le rayon de courbure de la face convexe est de 116 mm). Le verre est soumis à un traitement de surface par plasma d'oxygène sous pression réduite.

Le collage du film sur la lentille se fait au moyen du procédé décrit dans WO 2006/105999 par application d'une pression uniforme d'environ 0,03 MPa par le biais d'un tampon déformable. Après collage du film, un verre comparatif présente des craquelures alors que les verres selon l'invention sont exempts de craquelures.

## Revendications

1. Procédé de préparation d'un article d'optique ayant un rayon de courbure non nul revêtu d'un revêtement interférentiel, comprenant les étapes suivantes :
a) fournir un film thermoplastique revêtu d'un revêtement interférentiel multicouche, ledit revêtement interférentiel comprenant au moins une couche ayant un indice de réfraction supérieur à 1,65 et au moins une couche ayant un indice de réfraction inférieur ou égal à 1,65, l'une au moins des couches du revêtement interférentiel étant une couche de nature organique-inorganique ayant été déposée sous vide,
b) laminer ledit film thermoplastique revêtu sur un article d'optique comprenant un substrat, au moyen d'une couche d'adhésif, ladite couche d'adhésif étant disposée entre l'article d'optique et la surface du film thermoplastique non revêtue du revêtement interférentiel,
c) récupérer ledit article d'optique comprenant un substrat revêtu de la couche d'adhésif, du film thermoplastique et du revêtement interférentiel multicouche.

2. Procédé de préparation selon la revendication 1, **caractérisé en ce qu'**au moins une partie du spectre de réflexion dans le domaine visible du revêtement interférentiel multicouche présent sur le film thermoplastique fourni à l'étape a) présente un déplacement vers les longueurs d'onde courtes sous l'effet de la déformation induite par la conformation du film thermoplastique revêtu à la géométrie de la surface dudit article d'optique, ledit déplacement étant de préférence inférieur à 70 nm.

3. Procédé de préparation selon l'une quelconque des revendications précédentes, **caractérisé en ce que** le revêtement interférentiel de l'article d'optique récupéré à l'étape c) présente une propriété optique souhaitée ayant la valeur V, et **en ce que** la valeur de ladite propriété optique du revêtement interférentiel présent sur le film thermoplastique fourni à l'étape a) est différente de V, de façon à tenir compte de la déformation induite par la lamination du film thermoplastique revêtu sur la surface dudit article d'optique qui a pour effet de modifier la valeur de cette propriété optique.

4. Procédé de préparation selon l'une quelconque des revendications précédentes, **caractérisé en ce que** l'étape b) est réalisée en faisant subir ou après avoir fait subir au film thermoplastique revêtu un taux de déformation supérieur ou égal à 1 % sur au moins une partie de sa surface, de façon à le conformer à la géométrie de la surface dudit article d'optique.

5. Procédé de préparation selon l'une quelconque des revendications précédentes, **caractérisé en ce que** l'étape de lamination b) comprend :
b1) thermoformer ledit film thermoplastique revêtu fourni à l'étape a) de façon à le conformer à la géométrie de la surface de l'article d'optique, et
b2) appliquer sur le substrat de l'article d'optique ledit film thermoplastique obtenu à l'étape b1) en le faisant adhérer au moyen de la couche d'adhésif.

6. Procédé de préparation selon l'une quelconque des revendications précédentes, **caractérisé en ce que** ladite couche de nature organique-inorganique comprend des atomes de carbone, d'oxygène et d'un métal ou metalloïde.

7. Procédé de préparation selon l'une quelconque des revendications précédentes, **caractérisé en ce que** ladite couche de nature organique-inorganique est obtenue par dépôt sous vide, assisté par une source d'ions, d'au moins un composé organosilicié.

8. Procédé de préparation selon l'une quelconque des revendications précédentes, **caractérisé en ce que** ladite couche de nature organique-inorganique est obtenue par dépôt sous vide, assisté par une source d'ions, d'au moins un oxyde de titane et d'au moins un composé organosilicié.

9. Procédé de préparation selon l'une quelconque des revendications 7 ou 8, **caractérisé en ce que** le composé organosilicié comporte au moins un groupe divalent de formule : 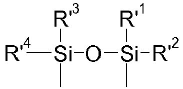 où R'¹ à R'⁴ désignent indépendamment des groupes alkyle, vinyle, aryle, hydroxyle ou des groupes hydrolysables, ou **en ce que** le composé A répond à la formule : 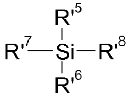 dans laquelle R'⁵, R'⁶, R'⁷, R'⁸ désignent indépendamment des groupes hydroxyle ou des groupes hydrolysables tels que des groupes OR, dans lesquels R est un groupe alkyle, le composé organosilicié étant préférentiellement choisi parmi l'octaméthylcyclotétrasiloxane, le 2,4,6,8-tétraméthylcyclotétrasiloxane, le décaméthyltétrasiloxane, le décaméthyl cyclopentasiloxane, le dodécaméthylpentasiloxane, et l'hexaméthyldisiloxane.

10. Procédé de préparation selon l'une quelconque des revendications précédentes, **caractérisé en ce que** ladite couche de nature organique-inorganique a une épaisseur allant de 5 à 500 nm, de préférence de 10 à 250 nm.

11. Procédé de préparation selon l'une quelconque des revendications précédentes, **caractérisé en ce que** le revêtement interférentiel est un revêtement antireflet ou un filtre optique.

12. Procédé de préparation selon l'une quelconque des revendications précédentes, **caractérisé en ce que** le taux de déformation est supérieur ou égal à 1,2 %, mieux supérieur ou égal à 1,5 %.

13. Procédé de préparation selon l'une quelconque des revendications précédentes, **caractérisé en ce que** l'article d'optique est une lentille ophtalmique.

14. Article d'optique ayant un rayon de courbure non nul comprenant un substrat sur lequel sont déposés une couche d'adhésif, un film thermoplastique et un revêtement interférentiel multicouche, ledit film thermoplastique adhérant à la surface de la lentille au moyen de ladite couche d'adhésif disposée entre l'article d'optique et la surface du film thermoplastique non revêtue du revêtement interférentiel, ledit revêtement interférentiel comprenant au moins une couche ayant un indice de réfraction supérieur à 1,65 et au moins une couche ayant un indice de réfraction inférieur ou égal à 1,65, l'une au moins des couches du revêtement interférentiel étant une couche de nature organique-inorganique ayant été déposée sous vide.

15. Article selon la revendication 14, **caractérisé en ce qu'**il a été obtenu selon le procédé de l'une quelconque des revendications 1 à 13 par lamination sur l'article d'optique, au moyen de ladite couche d'adhésif, dudit film thermoplastique revêtu dudit revêtement interférentiel multicouche.

16. Film thermoplastique revêtu d'un revêtement interférentiel multicouche, ledit revêtement interférentiel comprenant au moins une couche ayant un indice de réfraction supérieur à 1,65 et au moins une couche ayant un indice de réfraction inférieur ou égal à 1,65, l'une au moins des couches du revêtement interférentiel étant une couche de nature organique-inorganique ayant été déposée sous vide.

## Patentansprüche

1. Verfahren zur Herstellung eines optischen Artikels mit einem Krümmungsradius von Nicht-Null, der mit einer Interferenzbeschichtung beschichtet ist, umfassend die folgenden Schritte:
a) Bereitstellen eines thermoplastischen Films, der mit einer mehrschichtigen Interferenzbeschichtung beschichtet ist, wobei die Interferenzbeschichtung mindestens eine Schicht mit einem Brechungsindex größer als 1,65 und mindestens eine Schicht mit einem Brechungsindex kleiner oder gleich 1,65 umfasst, wobei mindestens eine der Schichten der Interferenzbeschichtung eine Schicht organischer-anorganischer Natur ist, die im Vakuum abgeschieden wurde,
b) Laminieren des beschichteten thermoplastischen Films auf einen optischen Artikel, umfassend ein Substrat, mittels einer Haftschicht, wobei die Haftschicht zwischen dem optischen Artikel und der Fläche des thermoplastischen Films angeordnet wird, die nicht mit der interferenzbeschichtung beschichtet ist,
c) Erhalten des optischen Artikels, umfassend ein Substrat, das mit der Haftschicht, dem thermoplastischen Film und der mehrschichtigen Interferenzbeschichtung beschichtet ist.

2. Herstellungsverfahren nach Anspruch 1,
**dadurch gekennzeichnet, dass** mindestens ein Teil des Reflexionsspektrums im sichtbaren Bereich der mehrschichtigen Interferenzbeschichtung, die auf dem thermoplastischen Film vorliegt, der in dem Schritt a) bereitgestellt wird, eine Verschiebung zu kurzen Wellenlängen unter der Einwirkung der Verformung aufweist, die durch die Anpassung des beschichteten thermoplastischen Films an die Geometrie der Fläche des optischen Artikels induziert wird, wobei die Verschiebung vorzugsweise kleiner ist als 70 nm.

3. Herstellungsverfahren nach einem der vorhergehenden Ansprüche,
**dadurch gekennzeichnet, dass** die Interferenzbeschichtung des optischen Artikels, der in dem Schritt c) erhalten wird, eine gewünschte optische Eigenschaft mit dem Wert V aufweist, und dadurch, dass der Wert der optischen Eigenschaft der Interferenzbeschichtung, die auf dem thermoplastischen Film vorliegt, der in dem Schritt a) bereitgestellt wird, von V verschieden ist, um die Verformung zu berücksichtigen, die durch das Laminieren des beschichteten thermoplastischen Films auf die Fläche des optischen Artikels induziert wird, das den Effekt hat, den Wert dieser optischen Eigenschaft zu modifizieren.

4. Herstellungsverfahren nach einem der vorhergehenden Ansprüche,
**dadurch gekennzeichnet, dass** der Schritt b) durchgeführt wird, indem oder nachdem der beschichtete thermoplastische Film einem Verformungsgrad größer oder gleich 1 % auf mindestens einem Teil seiner Fläche ausgesetzt wird, um an die Geometrie der Fläche des optischen Artikels angepasst zu werden.

5. Herstellungsverfahren nach einem der vorhergehenden Ansprüche,
**dadurch gekennzeichnet, dass** der Laminierschritt b) umfasst:
b1) Thermoformen des beschichteten thermoplastischen Films, der in dem Schritt a) bereitgestellt wird, um an die Geometrie der Fläche des optischen Artikels angepasst zu werden, und
b2) Aufbringen des thermoplastischen Films, der in dem Schritt b1) erhalten wird, auf dem Substrat des optischen Artikels, indem dieser mittels der Haftschicht haftend aufgebracht wird.

6. Herstellungsverfahren nach einem der vorhergehenden Ansprüche,
**dadurch gekennzeichnet, dass** die Schicht der organischen-anorganischen Natur Kohlenstoff-, Sauerstoff- und Metalloxidatome umfasst.

7. Herstellungsverfahren nach einem der vorhergehenden Ansprüche,
**dadurch gekennzeichnet, dass** die Schicht der organischen-anorganischen Natur durch Vakuumabscheidung, unterstützt von einer Ionenquelle, mindestens einer Organosiliciumverbindung erhalten wird.

8. Herstellungsverfahren nach einem der vorhergehenden Ansprüche,
**dadurch gekennzeichnet, dass** die Schicht der organischen-anorganischen Natur durch Vakuumabscheidung, unterstützt von einer Ionenquelle, mindestens eines Titanoxids und mindestens einer Organosiliciumverbindung erhalten wird.

9. Herstellungsverfahren nach einem der Ansprüche 7 oder 8,
**dadurch gekennzeichnet, dass** die Organosiliciumverbindung mindestens eine zweiwertige Gruppe umfasst mit der Formel: 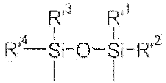 wobei R'¹ und R'⁴ unabhängig Alkyl-, Vinyl-, Aryl-, Hydroxylgruppen oder hydrolysierbare Gruppen darstellen, oder dadurch, dass die Verbindung A die Formel aufweist: 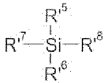 wobei R'⁵, R'⁶, R'⁷, R'⁸ unabhängig Hydroxylgruppen oder hydrolysierbare Gruppen darstellen, wie die Gruppen OR, wobei R eine Alkylgruppe ist, wobei die Organosiliciumverbindung vorzugsweise ausgewählt wird aus Octamethylcyclotetrasiloxan, 2,4,6,8-Tetramethylcyclotetrasiloxan, Decamethyltetrasiloxan, Decamethylcyclopentasiloxan, Dodecamethylpentasiloxan und Hexamethyldisiloxan.

10. Herstellungsverfahren nach einem der vorhergehenden Ansprüche,
**dadurch gekennzeichnet, dass** die Schicht der organischen-anorganischen Natur eine Dicke von 5 bis 500 nm, vorzugsweise von 10 bis 250 nm, aufweist.

11. Herstellungsverfahren nach einem der vorhergehenden Ansprüche,
**dadurch gekennzeichnet, dass** die Interferenzbeschichtung eine Antireflexbeschichtung oder ein optischer Filter ist.

12. Herstellungsverfahren nach einem der vorhergehenden Ansprüche,
**dadurch gekennzeichnet, dass** der Verformungsgrad größer oder gleich 1,2 % ist, besser größer oder gleich 1,5 %,

13. Herstellungsverfahren nach einem der vorhergehenden Ansprüche,
**dadurch gekennzeichnet, dass** der optische Artikel eine ophthalmische Linse ist.

14. Optischer Artikel mit einem Krümmungsradius von nicht Null, umfassend ein Substrat, auf dem eine Haftschicht, ein thermoplastischer Film und eine mehrschichtige Interferenzbeschichtung abgeschieden sind, wobei der thermoplastische Film auf der Fläche der Linse mit Hilfe der Haftschicht haftet, welche zwischen dem optischen Artikel und der Fläche des thermoplastischen Films angeordnet ist, die nicht mit der Interferenzbeschichtung beschichtet ist, wobei die Interferenzbeschichtung mindestens eine Schicht mit einem Brechungsindex größer als 1,65 und mindestens eine Schicht mit einem Brechungsindex kleiner oder gleich 1,65 umfasst, wobei mindestens eine der Schichten der Interferenzbeschichtung eine Schicht organischer-anorganischer Natur ist, die im Vakuum abgeschieden wurde.

15. Artikel nach Anspruch 14, **dadurch gekennzeichnet, dass** dieser gemäß dem Verfahren nach einem der Ansprüche 1 bis 13 erhalten wurde, durch Laminieren, auf den optischen Artikel, mittels der Haftschicht, des thermoplastischen Films, der mit der mehrschichtigen Interferenzbeschichtung beschichtet ist.

16. Thermoplastischer Film, welcher mit einer mehrschichtigen Interferenzbeschichtung beschichtet ist, umfassend mindestens eine Schicht mit einem Brechungsindex größer als 1,65 und mindestens eine Schicht mit einem Brechungsindex kleiner oder gleich 1,65, wobei mindestens eine der Schichten der Interferenzbeschichtung eine Schicht organischer-anorganischer Natur ist, die im Vakuum abgeschieden wurde.

## Claims

1. A process for preparing an optical article having a non-zero radius of curvature coated with an interference coating, comprising the following steps:
a) providing a thermoplastic film coated with a multilayer interference coating, said interference coating comprising at least one layer having a refractive index of greater than 1.65 and at least one layer having a refractive index of less than or equal to 1.65, at least one of the layers of the interference coating being a layer of organic-inorganic nature that has been deposited under vacuum,
b) laminating said coated thermoplastic film on an optical article comprising a substrate, by means of a layer of adhesive, said layer of adhesive being positioned between the optical article and the surface of the thermoplastic film not coated with the interference coating,
c) recovering said optical article comprising a substrate coated with the layer of adhesive, the thermoplastic film and the multilayer interference coating.

2. The preparation process as claimed in claim 1, **characterized in that** at least one portion of the reflection spectrum in the visible range of the multilayer interference coating present on the thermoplastic film provided in step a) has a shift toward short wavelengths under the effect of the deformation induced by conforming the coated thermoplastic film to the geometry of the surface of said optical article, said shift preferably being less than 70 nm.

3. The preparation process as claimed in either one of the preceding claims, **characterized in that** the interference coating of the optical article recovered in step c) has a desired optical property having the value V, and **in that** the value of said optical property of the interference coating present on the thermoplastic film provided in step a) is different from V, so as to take into account the deformation induced by laminating the coated thermoplastic film on the surface of said optical article which has the effect of modifying the value of this optical property.

4. The preparation process as claimed in any one of the preceding claims, **characterized in that** step b) is carried out by subjecting or after having subjected the coated thermoplastic film to a degree of deformation greater than or equal to 1% over at least one portion of its surface, so as to conform it to the geometry of the surface of said optical article.

5. The preparation process as claimed in any one of the preceding claims, **characterized in that** laminating step b) comprises:
b1) thermoforming said coated thermoplastic film provided in step a) so as to conform it to the geometry of the surface of the optical article, and
b2) applying to the substrate of the optical article said thermoplastic film obtained in step b1) by making it adhere using the layer of adhesive.

6. The preparation process as claimed in any one of the preceding claims, **characterized in that** said layer of organic-inorganic nature comprises atoms of carbon, of oxygen and of a metal or metalloid.

7. The preparation process as claimed in any one of the preceding claims, **characterized in that** said layer of organic-inorganic nature is obtained by vacuum deposition, assisted by a source of ions, of at least one organosilicon compound.

8. The preparation process as claimed in any one of the preceding claims, **characterized in that** said layer of organic-inorganic nature is obtained by vacuum deposition, assisted by a source of ions, of at least one titanium oxide and of at least one organosilicon compound.

9. The preparation process as claimed in any one of claims 7 or 8, **characterized in that** the organosilicon compound comprises at least one divalent group of formula: 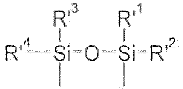 where R'¹ to R'⁴ independently denote alkyl, vinyl, aryl or hydroxyl groups or hydrolysable groups, or **in that** the compound A corresponds to the formula; 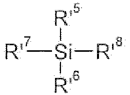 in which R'⁵, R'⁶, R'⁷ and R'⁸ independently denote hydroxyl groups or hydrolysable groups, such as OR groups, in which R is an alkyl group, the organosilicon compound being preferably chosen from octamethylcyclotetrasiloxane, 2,4,6,8-tetramethylcyclotetrasiloxane, decamethyltetrasiloxane, decamethylcyclopentasiloxane, dodecamethylpentasiloxane, and hexamethyldisiloxane.

10. The preparation process as claimed in any one of the preceding claims, **characterized in that** said layer of organic-inorganic nature has a thickness ranging from 5 to 500 nm, preferably from 10 to 250 nm.

11. The preparation process as claimed in any one of the preceding claims, **characterized in that** the interference coating is an antireflection coating or an optical filter.

12. The preparation process as claimed in any one of the preceding claims, **characterized in that** the degree of deformation is greater than or equal to 1.2%, better still greater than or equal to 1.5%.

13. The preparation process as claimed in any one of the preceding claims, **characterized in that** the optical article is an ophthalmic lens.

14. An optical article having a non-zero radius of curvature comprising a substrate on which a layer of adhesive, a thermoplastic film and a multilayer interference coating are deposited, said thermoplastic film adhering to the surface of the lens by means of said layer of adhesive positioned between the optical article and the surface of the thermoplastic film not coated with interference coating, said interference coating comprising at least one layer having a refractive index of greater than 1.65 and at least one layer having a refractive index of less than or equal to 1.65, at least one of the layers of the interference coating being a layer of organic-inorganic nature that has been deposited under vacuum.

15. The article as claimed in claim 14, **characterized in that** it was obtained by the process of any one of claims 1 to 13 by laminating said thermoplastic film coated with said multilayer interference coating on the optical article, by means of said layer of adhesive.

16. A thermoplastic film coated with a multilayer interference coating, said interference coating comprising at least one layer having a refractive index of greater than 1.65 and at least one layer having a refractive index of less than or equal to 1.65, at least one of the layers of the interference coating being a layer of organic-inorganic nature that has been deposited under vacuum.
